# EUROPEAN PATENT APPLICATION

(11) **EP 1 450 351 A1**
(43) Date of publication of application: **25.08.2004**
(21) Application number: 02772950.8
(22) Date of filing: 27.09.2002
(51) Int. Cl.: G10L 15/22, G10L 13/08, G06F 3/16, H04N 7/14

(54) **DIALOGUE APPARATUS, DIALOGUE PARENT APPARATUS, DIALOGUE CHILD APPARATUS, DIALOGUE CONTROL METHOD, AND DIALOGUE CONTROL PROGRAM**

(30) Priority: 27.09.2001 JP 2001296824
(71) Applicant: MATSUSHITA ELECTRIC INDUSTRIAL CO., LTD., Kadoma-shi, Osaka 571-8501 (JP)
(72) Inventor: MAEKAWA, Hidetsugu, Ikoma-shi, Nara 630-0221 (JP); WAKITA, Yumi, Nara-shi, Nara 631-0074 (JP); MIZUTANI, Kenji, Ikoma-shi, Nara 630-0236 (JP); YOSHIZAWA, Shinichi, Hirakata-shi, Osaka 573-0064 (JP); HIROSE, Yoshifumi, Kashihara-shi, Nara 634-0835 (JP); MATSUI, Kenji, Ikoma-shi, Nara 630-0136 (JP)
(74) Representative: Grünecker, Kinkeldey, Stockmair & Schwanhäusser Anwaltssozietät
(86) International application number: PCT/JP2002/010118
(87) International publication number: WO 2003/030150

(57) **Abstract**

Even with an apparatus structure of a relatively small size, the possibility of misrecognizing speeches of a viewer can be reduced, and a conversation is smoothly sustained, whereby the viewer can readily have an impression that the conversation is established almost naturally. Such effects can be achieved by the following features. An image output section displays images which transit in a non-interactive manner for a viewer, such as broadcast images, or the like, on a display section. A conversation processing section outputs apparatus speech data for commencing a conversation based on conversation data which is stored in a conversation database and which is determined according to the transition of the images. When a speech is emitted by a viewer, the conversation processing section outputs apparatus speech data for replying to the speech of the viewer based on viewer speech data output from a speech recognition section and the conversation data.

## Description

### Technical Field

The present invention relates to techniques for a conversation apparatus for establishing a conversation in response to a speech of a person, for example, a viewer who is watching a television broadcast.

### Background Art

In recent years, techniques for allowing a user to give an order/instruction to a computer, or the like, by his/her speech and techniques for making a reply to such an order/instruction of the user in the form of image and sound have been proposed along with the progress of speech recognition technology and sound synthesis technology (for example, Japanese Unexamined Patent Publication No. 2001-249924, Japanese Unexamined Patent Publication No. H7-302351). Apparatuses which employ such techniques use a speech input and a sound output in order to make an operation and a reply which were conventionally realized by a keyboard or a pointing device and character representation, respectively.

However, these apparatuses accept predetermined speech inputs in accordance with the operations or replies of the apparatuses but cannot establish a conversation with a high degree of freedom.

On the other hand, an apparatus which may give an impression that a conversation is established almost naturally, for example, an interactive toy named *"Oshaberi Kazoku Shaberun",* has been known. An apparatus of this type performs speech recognition based on an input speech sound, and also has a conversation database for storing reply data which corresponds to recognition results such that the apparatus can reply to various kinds of speech contents. Furthermore, there is an apparatus which is designed to establish a more natural conversation. This apparatus performs language analysis or semantic analysis, or refers to a conversation history recorded in the form of a tree structure or a stack such that appropriate reply data can be retrieved from a large conversation database (for example, Japanese Patent No. 3017492).

However, in the above conventional techniques, it is difficult to appropriately establish a conversation with a relatively high degree of freedom while the size of the apparatus structure is decreased. That is, in the case where a conversation is commenced by a user's speech to an apparatus, the apparatus cannot appropriately recognize or reply to the conversation content of the user's speech without a fairly large conversation database installed in the apparatus because the degree of freedom of a conversation content is high. Specifically, in the case where the user speaks "What day is today?", the apparatus cannot reply to the user's speech if conversation data which is prepared with expectation for such a speech is not accumulated in the conversation database. If conversation data corresponding to a phrase "What time is it now?", which is phonetically similar to the phrase "What day is today?", is accumulated in the conversation database, the apparatus can make a mistake of recognizing the user's speech as the phrase "What time is it now?", and make the conversation incoherent by replying with the phrase "It's 10:50". Furthermore, in the case where speeches of the user and replies of the apparatus are repeatedly exchanged, the combinations of conversation contents can be exponentially increased. Thus, even if the apparatus has a fairly large database, it is difficult for the apparatus to continue making appropriate replies in a reliable manner.

### Disclosure of Invention

The present invention was conceived in view of the above problems. An objective of the present invention is to provide a conversation apparatus and a conversation control method, in which the possibility of misrecognizing user's speech is reduced, and a conversation is smoothly sustained to readily produce an impression that the conversation is established almost naturally, even with an apparatus structure of a relatively small size.

In order to achieve the above objective, the first conversation apparatus of the present invention comprises:
display control means for displaying on a display section images which transit in a non-interactive manner for a viewer based on image data;
conversation data storage means for storing conversation data corresponding to the transition of the images;
speech recognition means for performing recognition processing based on a speech emitted by the viewer to output viewer speech data which represents a speech content of the viewer;
conversation processing means for outputting apparatus speech data which represents a speech content to be output by the conversation apparatus based on the viewer speech data, the conversation data, and timing information determined according to the transition of the images; and
speech control means for allowing a speech emitting section to emit a sound based on the apparatus speech data.

With such an arrangement, a conversation about a content determined according to the transition of displayed images can be established. Therefore, it is readily possible to naturally introduce the viewer into conversation contents expected in advance by the conversation apparatus. Thus, even with an apparatus structure of a relatively small size, the possibility of misrecognizing speeches of the viewer can be reduced, and a conversation is smoothly sustained, whereby the viewer can readily have an impression that the conversation is established almost naturally.

The second conversation apparatus of the present invention is the first conversation apparatus further comprising input means, to which the image data and the conversation data are input through at least one of a wireless communication, a wire communication, a network communication, and a recording medium, and from which the input data is output to the display control means and the conversation data storage means.

The third conversation apparatus of the present invention is the second conversation apparatus wherein the input means is structured such that the image data and the conversation data are input through different routes.

Even if the image data and the conversation data are input through various routes as described above, an appropriate conversation can be established in the above-described manner so long as a correspondence (synchronization) between the transition of images and the conversation data is sustained. Thus, conversation apparatuses having various flexible structures can be realized.

The fourth conversation apparatus of the present invention is the second conversation apparatus wherein the input means is structured such that the conversation data is input at a predetermined timing determined according to the image data to output the timing information.

With such an arrangement, the timing information is output according to the timing of inputting the conversation data, whereby a correspondence between the transition of images and the conversation data can readily be established.

The fifth conversation apparatus of the present invention is the second conversation apparatus further comprising viewer speech data storage means for storing the viewer speech data,
wherein the conversation processing means is structured to output the apparatus speech data based on the viewer speech data stored in the viewer speech data storage means and conversation data newly input to the input means after the viewer utters the speech on which the viewer speech data depends.

With such an arrangement, a conversation about a content which is indefinite at the time when the conversation is commenced can be realized. Thus, an impression that a mechanical conversation is made under a predetermined scenario can be reduced and, for example, the viewer can have a feeling that he/she enjoys a broadcast program together with the apparatus while having quizzes.

The sixth conversation apparatus of the present invention is the first conversation apparatus wherein the conversation processing means is structured to output the apparatus speech data based on the timing information included in the image data.

The seventh conversation apparatus of the present invention is the sixth conversation apparatus wherein:
the conversation data storage means is structured to store a plurality of conversation data;
the image data includes conversation data specifying information for specifying at least one of the plurality of conversation data together with the timing information; and
the conversation processing means is structured to output the apparatus speech data based on the timing information and the conversation data specifying information.

The eighth conversation apparatus of the present invention is the first conversation apparatus further comprising time measurement means for outputting the timing information determined according to elapse of time during the display of the images,
wherein the conversation data includes output time information indicating the timing at which the apparatus speech data is to be output by the conversation processing means, and
the conversation processing means is structured to output the apparatus speech data based on the timing information and the output time information.

A correspondence between the transition of images and the conversation data can readily be established even by using the timing information included in image data, the conversation data specifying information for specifying conversation data, or the timing information determined according to the elapse of display time of images in the above manners.

The ninth conversation apparatus of the present invention is the first conversation apparatus wherein the conversation processing means is structured to output the apparatus speech data based on the conversation data and the timing information, thereby commencing a conversation with the viewer, and on the other hand, output the apparatus speech data based on the conversation data and the viewer speech data, thereby continuing the above commenced conversation.

With such an arrangement, a new conversation can be commenced based on the timing information determined according to the transition of images. Thus, it is possible with more certainty to naturally introduce the viewer into conversation contents expected in advance by the conversation apparatus.

The tenth conversation apparatus of the present invention is the ninth conversation apparatus wherein the conversation processing means is structured to commence the new conversation based on the degree of conformity between the apparatus speech data and the viewer speech data in a conversation already commenced with a viewer and based on the priority for commencing a new conversation with the viewer.

The eleventh conversation apparatus of the present invention is the ninth conversation apparatus wherein the conversation processing means is structured to commence a conversation with a viewer based on profile information about the viewer and conversation commencement condition information which represents a condition for commencing a conversation with the viewer according to the profile information.

The twelfth conversation apparatus of the present invention is the ninth conversation apparatus wherein the conversation processing means is structured to commence a new conversation based on the degree of conformity between the apparatus speech data and the viewer speech data in a conversation already commenced with a viewer, profile information about the viewer, and conversation commencement condition information which represents a condition for commencing a conversation with the viewer according to the degree of conformity and the profile information.

As described above, commencement of a new conversation is controlled based on the degree of conformity of a conversation, the priority for commencing a new conversation, and profile information of a viewer. For example, when the degree of conformity of a conversation is high, i.e., when a conversation is "lively" sustained, the conversation about a currently-discussed issue is continued. On the other hand, when a conversation focused more on the contents of images can be established, a new conversation can be commenced. Thus, it is readily possible to establish a conversation which gives a more natural impression.

The thirteenth conversation apparatus of the present invention is the twelfth conversation apparatus wherein the conversation processing means is structured to update the profile information according to the degree of conformity between the apparatus speech data and the viewer speech data in the commenced conversation.

With such an arrangement, the conformity of a conversation is fed back to the profile information. Thus, a more appropriate control for commencement of a conversation can be realized.

The fourteenth conversation apparatus of the present invention is the first conversation apparatus wherein the conversation processing means is structured to output the apparatus speech data when a certain series of the images are displayed in succession for a predetermined time length.

With such an arrangement, a viewer who is incessantly changing broadcast programs, for example, is prevented from being bothered by commencement of a conversation at every change of programs.

A conversation host device of the present invention comprises:
input means to which image data representing images which transit in a non-interactive manner for a viewer and conversation data corresponding to the transition of the images are input through at least one of a wireless communication, a wire communication, a network communication, and a recording medium;
display control means for displaying the images on a display section based on the image data; and
transmitting means for transmitting the conversation data and timing information determined according to the transition of the images to a conversation slave device.

A conversation slave device of the present invention comprises:
receiving means for receiving conversation data which is transmitted from a conversation host device and which corresponds to transition of images which transit in a non-interactive manner for a viewer and timing information determined according to the transition of the images;
conversation data storage means for storing the conversation data;
speech recognition means for performing recognition processing based on a speech emitted by the viewer to output viewer speech data which represents a speech content of the viewer;
conversation processing means for outputting apparatus speech data which represents a speech content to be output by the conversation slave apparatus based on the viewer speech data, the conversation data, and the timing information; and
speech control means for allowing a speech emitting section to emit a sound based on the apparatus speech data.

The first conversation control method of the present invention comprises:
a display control step of allowing a display section to display images which transit in a non-interactive manner for a viewer based on image data;
a speech recognition step of performing recognition processing based on a speech emitted by the viewer to output viewer speech data which represents a speech content of the viewer;
a conversation processing step of outputting apparatus speech data which represents a speech content to be output by a conversation apparatus based on the viewer speech data, the conversation data which corresponds to the transition of the images, and the timing information determined according to the transition of the images; and
a speech control step of allowing a speech emitting section to emit a sound based on the apparatus speech data.

The second conversation control method of the present invention comprises:
an input step of inputting image data representing images which transit in a non-interactive manner for a viewer and conversation data corresponding to the transition of the images through at least one of a wireless communication, a wire communication, a network communication, and a recording medium;
a display control step of displaying the images on a display section based on the image data; and
a transmission step of transmitting the conversation data and timing information determined according to the transition of the images to a conversation slave device.

The third conversation control method of the present invention comprises:
a reception step of receiving conversation data which is transmitted from a conversation host device and which corresponds to transition of images which transit in a non-interactive manner for a viewer and of receiving timing information determined according to the transition of the images;
a speech recognition step of performing recognition processing based on a speech emitted by the viewer to output viewer speech data which represents a speech content of the viewer;
a conversation processing step of outputting apparatus speech data which represents a speech content to be output by the conversation slave apparatus based on the viewer speech data, the conversation data, and the timing information; and
a speech control step of allowing a speech emitting section to emit a sound based on the apparatus speech data.

The first conversation control program of the present invention instructs a computer to execute the following steps:
a display control step of allowing a display section to display images which transit in a non-interactive manner for a viewer based on image data;
a speech recognition step of performing recognition processing based on a speech emitted by the viewer to output viewer speech data which represents a speech content of the viewer;
a conversation processing step of outputting apparatus speech data which represents a speech content to be output by a conversation apparatus based on the viewer speech data, the conversation data which corresponds to the transition of the images, and the timing information determined according to the transition of the images; and
a speech control step of allowing a speech emitting section to emit a sound based on the apparatus speech data.

The second conversation control program of the present invention instructs a computer to execute the following steps:
an input step of inputting image data representing images which transit in a non-interactive manner for a viewer and conversation data corresponding to the transition of the images through at least one of a wireless communication, a wire communication, a network communication, and a recording medium;
a display control step of displaying the images on a display section based on the image data; and
a transmission step of transmitting the conversation data and timing information determined according to the transition of the images to a conversation slave device.

The third conversation control program of the present invention instructs a computer to execute the following steps:
a reception step of receiving conversation data which is transmitted from a conversation host device and which corresponds to transition of images which transit in a non-interactive manner for a viewer and timing information determined according to the transition of the images;
a speech recognition step of performing recognition processing based on a speech emitted by the viewer to output viewer speech data which represents a speech content of the viewer;
a conversation processing step of outputting apparatus speech data which represents a speech content to be output by the conversation slave apparatus based on the viewer speech data, the conversation data, and the timing information; and
a speech control step of allowing a speech emitting section to emit a sound based on the apparatus speech data.

Also with these methods and programs, a conversation about a content determined according to the transition of displayed images can be established as described above. Therefore, it is readily possible to naturally introduce the viewer into conversation contents expected in advance by the conversation apparatus. Thus, even with an apparatus structure of a relatively small size, the possibility of misrecognizing speeches of the viewer can be reduced, and a conversation is smoothly sustained, whereby the viewer can readily have an impression that the conversation is established almost naturally.

### Brief Description of Drawings

Figure **1** is a block diagram showing a structure of a conversation apparatus according to embodiment 1.
Figure **2** is an illustration showing an exemplary display of an image according to embodiment 1.
Figure **3** is an illustration showing contents stored in a conversation database according to embodiment 1.
Figure **4** is an illustration showing the entire structure of a conversation apparatus of embodiment 2.
Figure **5** is a block diagram showing a specific structure embodiment 2.
Figure **6** is an illustration showing contents stored in a conversation database according to embodiment 2.
Figure **7** is a flowchart showing a conversation operation according to embodiment 2.
Figure **8** is a block diagram showing a specific structure of a conversation apparatus of embodiment 3.
Figure **9** is an illustration showing contents stored in a keyword dictionary according to embodiment 3.
Figure **10** is an illustration showing contents stored in a conversation database according to embodiment 3.
Figure **11** is a flowchart showing the entire conversation operation according to embodiment 3.
Figure **12** is an illustration showing an example of a display screen according to embodiment 3.
Figure **13** is a flowchart showing details of an operation of conversation processing according to embodiment 3.
Figure **14** is a block diagram showing a specific structure of a conversation apparatus of embodiment 4.
Figure **15** is a flowchart showing details of an operation of conversation processing according to embodiment 4.
Figure **16** is an illustration showing contents stored in a keyword dictionary according to embodiment 4.
Figure **17** is an illustration showing contents stored in a conversation database according to embodiment 4.
Figure **18** is an illustration showing contents stored in a temporary storage section according to embodiment 4.
Figure **19** is an illustration showing contents stored in a data broadcast information accumulating section of a conversation apparatus according to embodiment 5.
Figure **20** is an illustration showing contents stored in a conversation script database according to embodiment 5.
Figure **21** is a block diagram showing a specific structure of embodiment 5.
Figure **22** is a flowchart showing the entire conversation operation according to embodiment 5.
Figure **23** is a block diagram showing a specific structure of a conversation apparatus of embodiment 6.

### Best Mode for Carrying Out the Invention

Hereinafter, embodiments of the present invention will be described with reference to the drawings.

### (Embodiment 1)

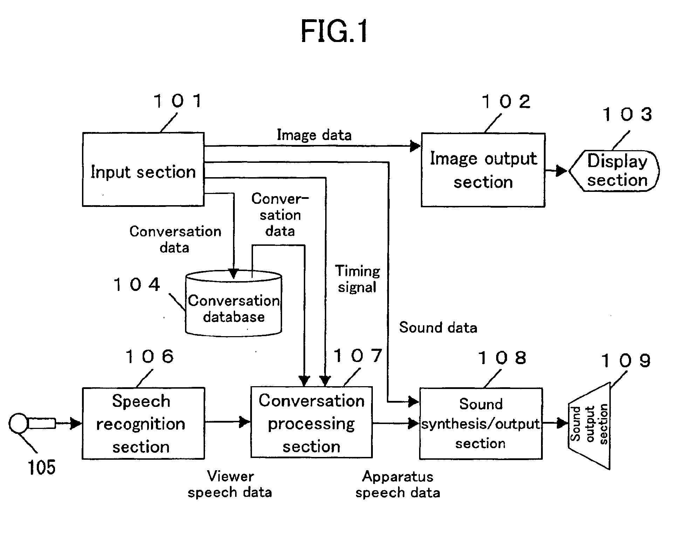

In the first place, a principle structure of the present invention is described by explaining an example of a television receiver which can receive data broadcasts including program information and program supplementary information. Figure **1** is a block diagram showing an entire structure ofthe television receiver.

An input section 101 receives a television broadcast wave of a data broadcast, and separately outputs image data and sound data, which are included in the program information, and conversation data and a timing signal for indicating a timing of commencement of a conversation, which are included in the above program supplementary information. Herein, the image data and sound data are not limited to digital data, but may be general data including an analog video signal and an analog sound signal.

An image output section **102** outputs an image signal based on the image data, and displays an image on a display section **103**, such as a cathode ray tube, or the like.

A conversation database **104** temporarily stores conversation data output from the input section **101**.

A speech recognition section **106** performs speech recognition processing on a speech sound of a viewer which is input through a sound input section **105**, such as a microphone, and outputs viewer speech data which represents a speech content.

When a timing signal is input from the input section **101** to a conversation processing section **107**, the conversation processing section **107** outputs apparatus speech data for commencing a conversation based on the conversation data stored in the conversation database **104**. Thereafter, when a viewer offers a speech, the conversation processing section **107** outputs apparatus speech data for replying to the speech of the viewer based on the viewer speech data output from the speech recognition section **106** and the conversation data stored in the conversation database **104**.

A sound synthesis/output section **10**8 performs sound synthesis processing and digital-analog conversion based on the apparatus speech data output from the conversation processing section **107** and the sound data output from the input section **101** and outputs a sound signal such that a sound output section **109**, such as a loudspeaker, or the like, emits a sound.

In the television receiver having the above-described structure, a conversation is made according to display of images as described below.

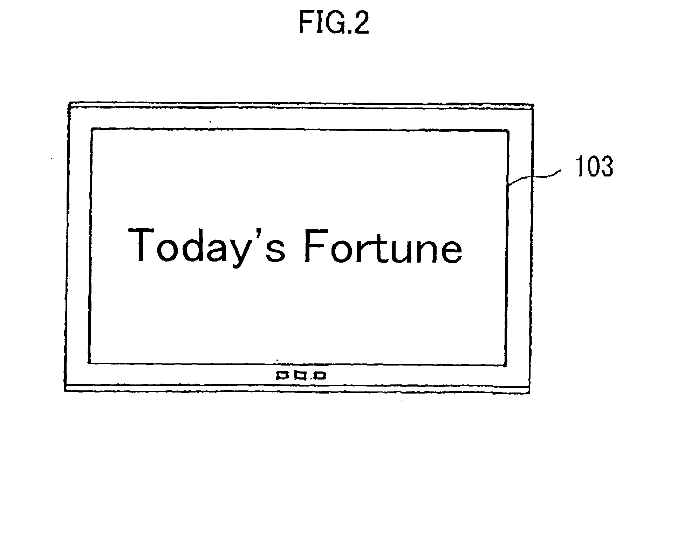

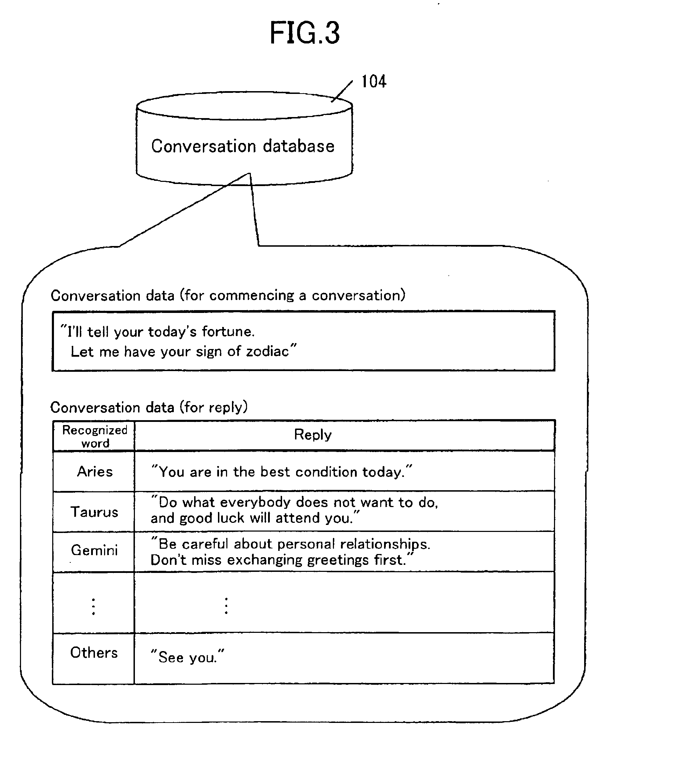

Now consider a case where a program entitled "Today's Fortune" is put on the air and the title of the program is displayed on the display section **103** as shown in Figure **2**, and thereafter, a fortune of each sign of zodiac is displayed on the display section **103**. At this time, if conversation data corresponding to the image data, which is shown in Figure **3**, is received by the conversation database **104**, the conversation data is stored in the conversation database **104.** Thereafter, when a timing signal is received by the conversation processing section **107,** the conversation processing section **107** reads out the conversation data for commencing a conversation from the conversation database **104,** and outputs the apparatus speech data to the sound synthesis/output section **108**. Then, a speech "I'll tell your today's fortune. Let me have your sign of zodiac" is emitted from the sound output section **109**.

If the viewer emits a speech including the word "Gemini" in response to the emitted speech, for example, the speech recognition section **106** outputs viewer speech data which represents recognition of the word to the conversation processing section **107**.

The conversation processing section **107** refers to the conversation data for reply which is stored in the conversation database **104**, reads out a reply (apparatus speech data) corresponding to the recognized word of "Gemini", and outputs the read reply to the sound synthesis/output section **108**. As a result, the sound "Be careful about personal relationships. Don't miss exchanging greetings first" is emitted from the sound output section **109**.

Thereafter, when the display screen is switched to a next program content, the issue of the conversation can also be switched to another issue according to the next display screen. Therefore, even if the issue is interrupted at the above timing, such an interruption does not make the viewer feel much unnatural.

Since the conversation is established according to the contents corresponding to the display screen as described above, the range of contents of user's reply is limited, and thus, the possibility of misrecognition by the speech recognition section **106** is decreased. Furthermore, it is possible to readily break up a conversation about a certain issue according to transition of the display screen and switch the issue to another, so that the number of times of repetition for a continued conversation can be reduced, and accordingly, the possibility of switching the issue to an unexpected issue is reduced. Thus, a conversation can readily be established in a relatively natural and appropriate manner without providing a large conversation database, or the like.

### (Embodiment 2)

Hereinafter, a more detailed example of a conversation apparatus is described. In the embodiments described below, elements which have functions equivalent to those of the elements of embodiment 1 are shown by the same reference numerals, and descriptions thereof are omitted.

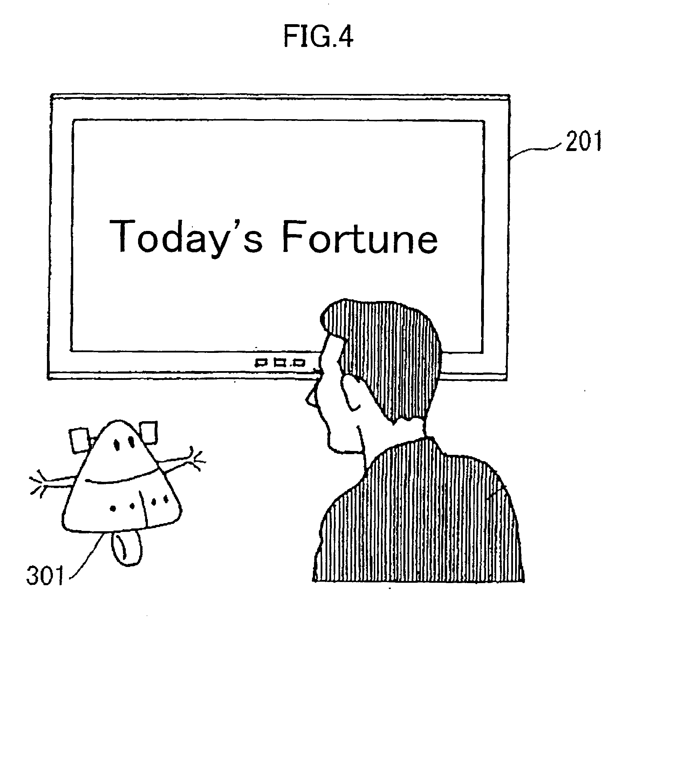

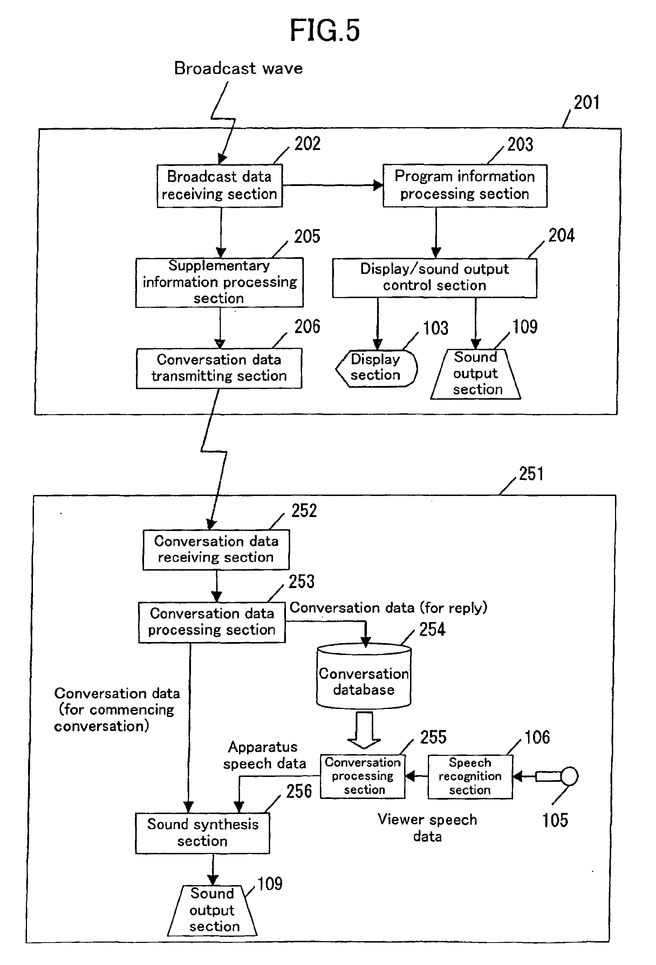

In embodiment 2, a conversation apparatus is constructed from a digital television receiver (conversation host device) **201** and a doll-shaped interactive agent device (conversation slave device) **251** as shown in Figures **4** and **5**.

The digital television receiver **201** includes a broadcast data receiving section **202**, a program information processing section **203**, a display/sound output control section **204**, a supplementary information processing section **205**, a conversation data transmitting section **206**, a display section **103**, and a sound output section **109**.

The interactive agent device **251** includes a conversation data receiving section **252**, a conversation data processing section **253**, a conversation database **254**, a conversation processing section **255**, a sound synthesis section **256**, a sound input section **105,** a speech recognition section **106,** and a sound output section **109.**

The broadcast data receiving section **202** of the digital television receiver **201** receives a television broadcast wave of a digital broadcast which includes program information (image data and sound data) and program supplementary information (conversation data), and extracts and outputs the program information and the program supplementary information.

The program information processing section **203** and the display/sound output control section **204** performs processing similar to that of a general television receiver. That is, the program information processing section **203** converts the program information received by the broadcast data receiving section **202** to image data and sound data. More specifically, the program information processing section **203** selects information of a certain program specified by a viewer among information of a plurality of programs included in the program information, and outputs image/sound data of the program. The display/sound output control section **204** outputs an image signal and a sound signal based on the image/sound data to allow the display section **103** to display an image and to allow the sound output section **109** to emit sound.

The supplementary information processing section **205** outputs conversation data corresponding to an image displayed on the display section **103** based on a program supplementary information output from the broadcast data receiving section **202**. For example, as previously described with reference to Figure **3**, this conversation data contains conversation data for commencing a conversation, such as the first word(s) given to a user, and conversation data for reply, which is in the form of a table including defined replies corresponding to recognition results of viewer's speeches.

The conversation data transmitting section **206** transmits the conversation data to the interactive agent device **251** via a radio wave, or the like. The conversation data receiving section **252** of the interactive agent device **251** receives the transmitted conversation data.

The conversation data processing section **253** of the interactive agent device **251** outputs conversation data for commencing a conversation, which is included in the received conversation data, to the sound synthesis section **256**. The conversation data processing section **253** retains conversation data for reply, which is also included in the received conversation data, in the conversation database **254**.

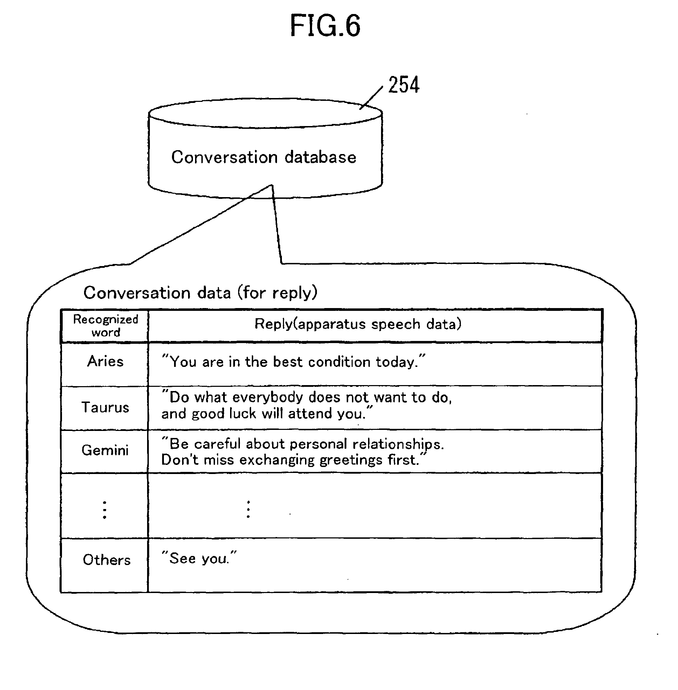

That is, embodiment 2 is different from embodiment 1 in that the conversation database **254** retains only the conversation data for reply as shown in Figure **6**, and the conversation processing section **255** outputs apparatus speech data for replying the speech of the viewer based on the conversation data for reply and the viewer speech data output from the speech recognition section **106**.

The sound synthesis section **256** performs sound synthesis processing and digital-analog conversion based on the conversation data (for commencing a conversation) output from the conversation data processing section **253** or the apparatus speech data output from the conversation processing section **255**, and outputs a sound signal such that the sound output section **109** emits a speech.

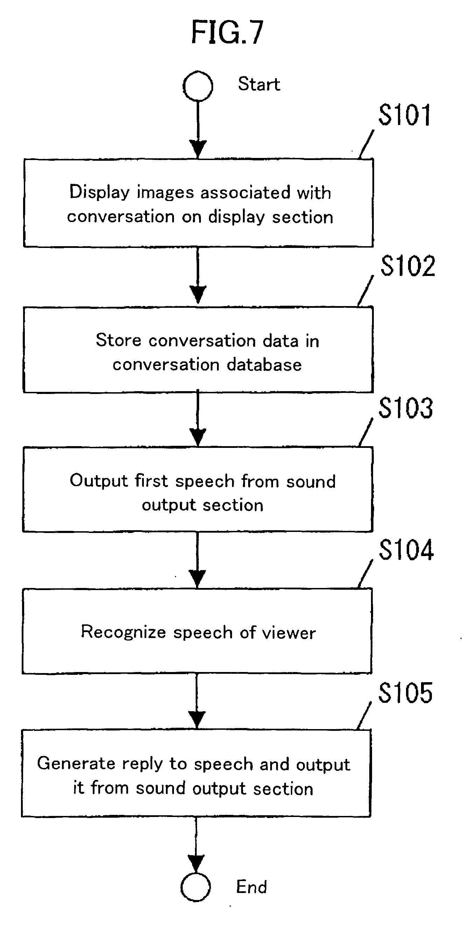

Consider a case where, in the conversation apparatus having the above-described structure, a program of fortune telling "Today's Fortune" is on the air and the following conversation (described in embodiment 1) is made according to the operation shown in Figure 7:
(1) Interactive agent device: "I'll tell your today's fortune. Let me have your sign of zodiac."
(2) Viewer: "Gemini"
(3) Interactive agent device: "Be careful about personal relationships. Don't miss exchanging greetings first."

### (S101):

In the first place, the broadcast data receiving section **202** receives a broadcast wave including program information and program supplementary information. Then, an image is displayed on the display section **103** and a sound is output by the sound output section **109** based on image data and sound data of the program information.

### (S102):

On the other hand, the supplementary information processing section **205** outputs conversation data associated with the displayed image (program of fortune telling) which is included in the received program supplementary information. The output conversation data is input to the conversation data processing section **253** via the conversation data transmitting section **206** of the digital television receiver **201** and the conversation data receiving section **252** of the interactive agent device **251**. The conversation data for reply is stored in the conversation database **254** (Figure **6**).

### (S103):

The conversation data for commencing a conversation is directly input from the conversation data processing section **253** to the sound synthesis section **256**, and the first conversational sound "I'll tell your today's fortune. Let me have your sign of zodiac" is emitted from the sound output section **109**. That is, the conversation is commenced in response to the reception of the conversation data without receiving the timing signal described in embodiment 1.

### (S104):

Thereafter, when the speech of the viewer "Gemini" is input from the sound input section **105**, speech recognition is performed by the speech recognition section **106**, and viewer speech data indicating that the speech content is "Gemini" is input to the conversation processing section **255**.

### (S105):

Then, the conversation processing section **255** refers to the conversation database **254,** selects the phrase "Be careful about personal relationships. Don't miss exchanging greetings first" as a reply to the speech "Gemini", and outputs apparatus speech data. The sound synthesis section **256** converts the apparatus speech data to a sound signal, and a sound of reply is emitted from the sound output section **109**.

As described above, in a similar manner described in embodiment 1, a conversation scene where a conversation is established in association with the program of fortune telling is shared. As a result, the possibility of misrecognizing the viewer's speech is reduced, and a conversation is smoothly sustained. Furthermore, in response to the end of the program or transition of the display screen, a conversation about the issue can be terminated without giving an unnatural impression to the viewer.

### (Embodiment 3)

A conversation apparatus of embodiment 3 is different from the conversation apparatus of embodiment 2 (Figure **5**) in that speech contents of a viewer are classified into the categories of "affirmative" and "negative", for example, and conversation data for reply is retrieved according to such categories. Furthermore, in embodiment 3, the previously-described conversation is made only when a viewer has watched a certain program for a predetermined time length or more and the viewer has an intention to make a conversation.

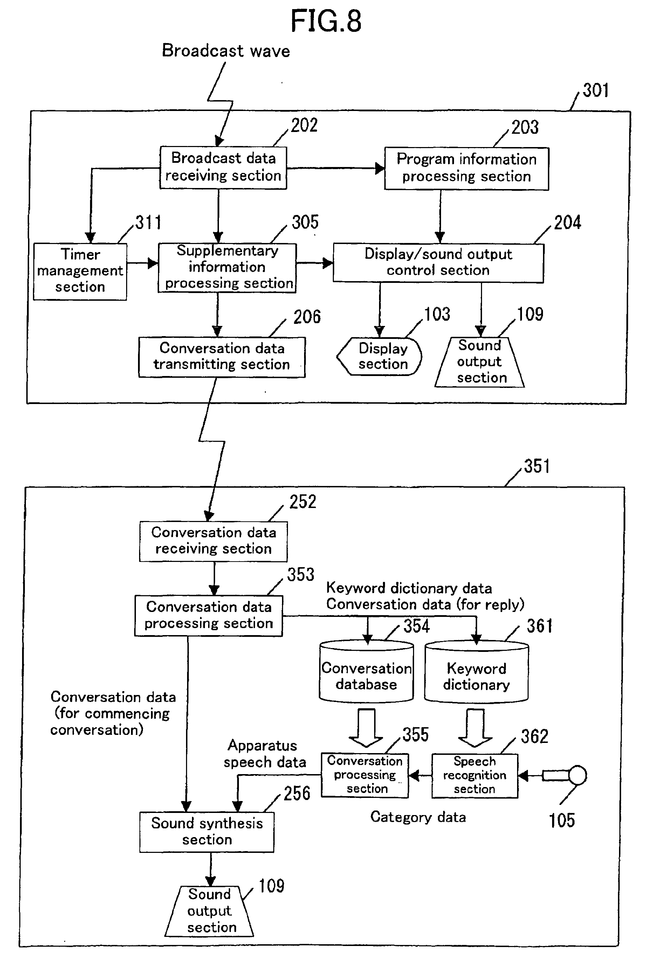

Specifically, as shown in Figure **8**, a digital television receiver **301** includes a timer management section **311** in addition to the elements of the digital television receiver **201** of embodiment 2 (Figure **5**). Furthermore, the digital television receiver **301** includes a supplementary information processing section **305** in place of the supplementary information processing section **205**.

The timer management section **311** measures the length of time where a certain program is viewed. Further, in the case where the program has been viewed for a predetermined time length or more, the timer management section **311** informs the supplementary information processing section **305** about it. For example, if a conversation is commenced every time channels are changed, a viewer who is incessantly changing (i.e., zapping) channels would be bothered by commencement of conversations. Thus, the apparatus of embodiment 3 is designed such that, when a certain program has been selected for about one minute or more, for example, the supplementary information processing section **305** is informed of such information, and then, a conversation is commenced.

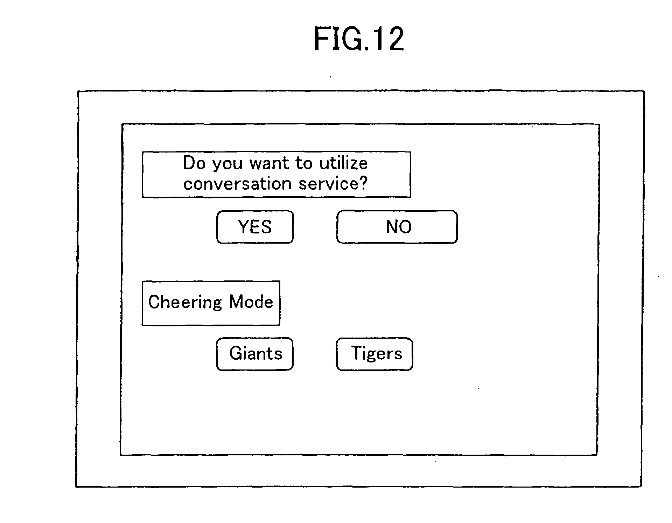

The supplementary information processing section **305** commences a conversation only when the supplementary information processing section **305** receives information from the timer management section **311** and the viewer has an intention to commence a conversation. For example, conversation data is transmitted to an interactive agent device **351** if a screen of Figure **12** (described later) is displayed on the display section **103** and the viewer performs a manipulation which denotes user's intention to have an conversation by a remote controller, or the like. In this embodiment, a position of a viewer in a conversation is confirmed (e.g., when a live program of a baseball game is viewed, it is confirmed whether the viewer is a fan of the Giants or Tigers) at the time of confirming the viewer's intension, such that a more appropriate conversation can be established.

The interactive agent device **351** includes a keyword dictionary **361** in addition to the elements of the interactive agent device **251** of embodiment 2. Furthermore, the interactive agent device **351** includes a speech recognition section **362**, a conversation data processing section **353**, a conversation database **354**, and a conversation processing section **355** in place of the speech recognition section **106**, the conversation data processing section **253**, the conversation database **254**, and the conversation processing section **255**.

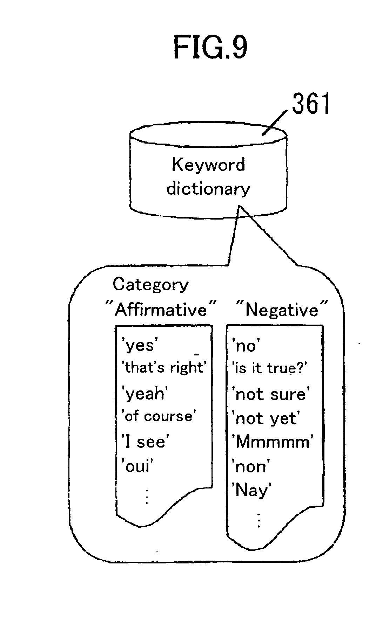

For example, as shown in Figure **9**, the keyword dictionary **361** stores keyword dictionary data indicating which category of "affirmative" or "negative" various keyword candidates included in speech contents of the viewer are within. Herein, the categories of "affirmative" and "negative" are provided with expectation for an affirmative or negative reply to an example of words given to the viewer at the time of commencing a conversation. The dictionary data stored in the keyword dictionary **361** is not limited to "affirmative" or "negative" keyword dictionary data, but may be keyword dictionary data of a category corresponding to a speech content emitted by the apparatus.

The speech recognition section **362** performs speech recognition processing on a speech sound of the viewer which is input from the sound input section **105**, so as to detect a word which specifies an intention of the viewer (keyword). The speech recognition section **362** refers to the keyword dictionary **361** and outputs category data indicating which category of "affirmative" or "negative" the intention of the viewer is within (intention of viewer). In the case where a keyword is no detected, the speech recognition section **362** outputs category data indicative of the category of "others". More specifically, for example, the presence of a word is detected using a technique called "keyword spotting". Alternatively, the category may be determined by generating from the speech input to the sound input section **105** text data which is dissected into words using a continual speech recognition method and checking whether any dissected word matches the keyword of the keyword dictionary **361**.

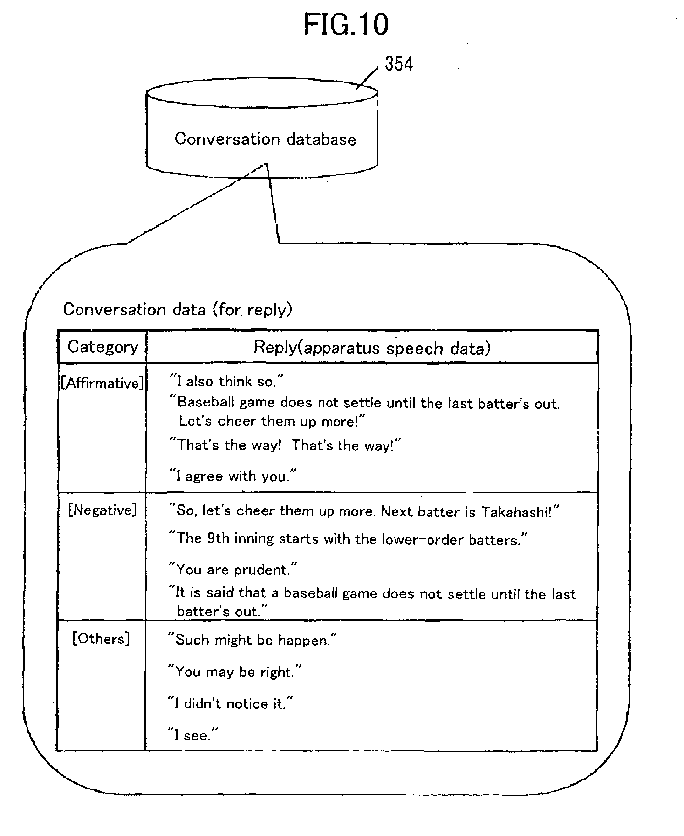

For example, as shown in Figure **10**, the conversation database **354** stores conversation data for reply which includes the categories of "affirmative", "negative", and "others" and a plurality of corresponding replies for each category (apparatus speech data). In the example illustrated in this drawing, the category of "others" includes data representing evasive replies.

The conversation processing section **355** outputs apparatus speech data for replying to a speech of the viewer based on the category data output from the speech recognition section **362** and the conversation data for reply which is retained in the conversation database **354**. More specifically, any reply is randomly selected from the plurality of replies corresponding to the above category data which are retained in the conversation database **354**, and the selected reply is output. (Alternately, replies may be selected such that the same reply is not selected in succession.) It should be noted that it is not always necessary to retain a plurality of replies as described above. However, if an appropriate number of replies are sustained and selection among the replies is performed randomly, it is easier to provide a conversation with a natural impression.

The conversation data processing section **353** retains the above-described conversation data for reply and keyword dictionary data in the conversation database **354** and the keyword dictionary **361**, respectively, based on the conversation data transmitted from the digital television receiver **301**. Furthermore, the conversation data processing section **353** outputs the conversation data for commencing a conversation to the sound synthesis section **256**.

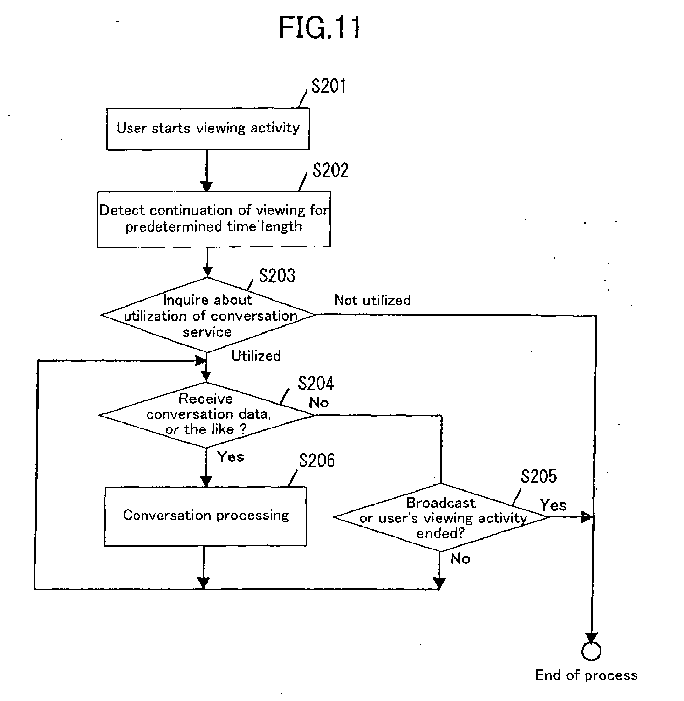

An operation executed when a baseball broadcast (sport program) is viewed in the conversation apparatus having the above-described structure is described with reference to Figure **11**.

### (S201):

In the first place, the broadcast data receiving section **202** receives program information of a baseball broadcast selected by a viewer. Based on image data and sound data included in the program information, images are displayed on the display section **103**, and sound is emitted by the sound output section **109**.

### (S202):

The timer management section **311** measures the length of time which has elapsed after the receipt of the baseball broadcast is selected. For example, if the elapsed time is one minute, the timer management section **311** informs the supplementary information processing section **305** about it. If a manipulation of changing the channel to be received is executed before one minute elapses, the above steps S201 and S202 are performed again.

### (S203):

In response to the information from the timer management section **311**, the supplementary information processing section 305 displays a window on the display section **103** for confirming whether or not the viewer requests a conversation service and confirming user's cheering mode (i.e., confirming which team the viewer is going to cheer up) as shown in Figure **12**, for example. Then, the supplementary information processing section **305** accepts, for example, a manipulation with a remote controller which is executed in a manner similar to selection of a program in an EPG (Electric Program Guide). In the case where a manipulation indicating that the viewer does not utilize the conversation service is made, the processing associated with conversation is terminated. If the program to be viewed is changed after that, the above process is performed again from step S201. The information which indicates the selected cheering mode is retained in the supplementary information processing section **305**, for example. The above-described display and acceptance of a manipulation may be realized by executing a conversation commencement command included in the program supplementary information in the supplementary information processing section **305** or the display/sound output control section **204**. Furthermore, it is not necessary to confirm whether or not the viewer utilizes the conversation service every time a program is viewed. The confirmation may be performed at the time of powering-on the apparatus. Alternatively, use of the conversation service may be set by selecting a predetermined setting-mode.

### (S204):

For example, if the user performs a manipulation indicating that the user utilizes the conversation service and cheers up the Giants, whether or not conversation data corresponding to the cheering mode for the Giants is received as the program supplementary information is checked.

### (S205):

If the conversation data is not received at step S204, whether a currently-received baseball broadcast has ended, or whether the viewing activity of the viewer has ended, i.e., whether the viewer performed a manipulation of changing the program to be used, is determined. If the broadcast or viewing activity has been ended, the above process is performed again from step S201. If the broadcast program or viewing activity has not been ended, the above process is performed again from step S204.

### (S206):

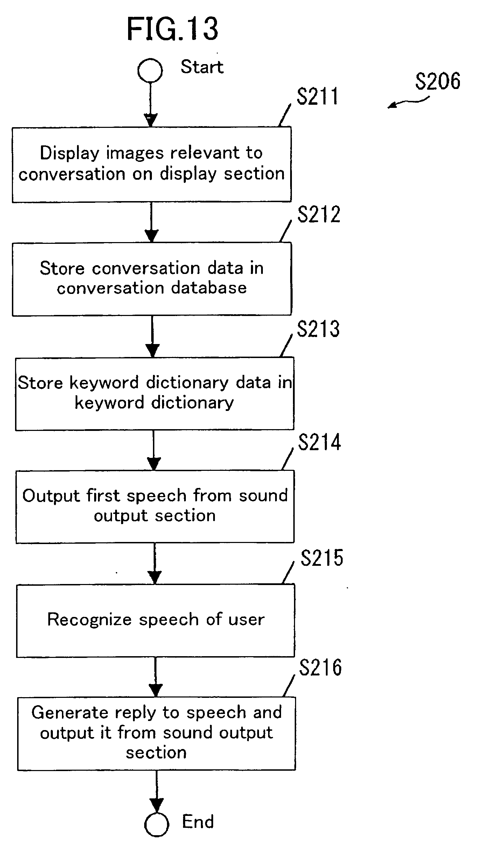

If the conversation data is received at step S204, conversation processing is performed, and thereafter, the process returns to step S204 so as to perform again the step of checking reception of the conversation data and the subsequent steps. For example, a process specifically shown in Figure **13** is performed as the conversation processing.

### (S211):

In the first place, the broadcast data receiving section **202** receives a broadcast wave including program information and program supplementary information. Based on image data and sound data included in the program information, images are displayed by the display section **103**, and sound is emitted by the sound output section **109**.

### (S212):

On the other hand, the supplementary information processing section **305** outputs conversation data concerning images to be displayed (baseball broadcast) and the cheering mode for the Giants which is included in the received program supplementary information. This conversation data includes conversation data for commencing a conversation, conversation data for reply, and keyword dictionary data. The output conversation data is input to the conversation data processing section **353** via the conversation data transmitting section **206** of the digital television receiver **301** and the conversation data receiving section **252** of the interactive agent device **351**. The conversation data for reply is stored in the conversation database **254** (Figure **10**).

### (S213):

The keyword dictionary data is stored in the keyword dictionary **361** (Figure **9**).

### (S214):

Furthermore, the conversation data for commencing a conversation is directly input from the conversation data processing section **353** to the sound synthesis section **256**. For example, if the conversation data is input at the time when the team the viewer is cheering up (the Giants) makes a score, the first conversation sound, for example, "Yes! Yes! He got another point! Kiyohara has been doing good jobs in the last games. The Giants lead by 3 points in the 8th inning. It means that the Giants almost win today's game, right?", is emitted from the sound output section **109**, whereby a conversation is commenced.

### (S215):

Thereafter, if the viewer says that "No, I'm not sure about it", the speech recognition section **362** detects the words "not sure" and "No" and outputs the category data indicating that the viewer spoke the words included in the category of "negative". Alternatively, if the viewer says that "They will win if Okajima is in good condition", any keyword retained in the keyword dictionary **36**1 is not detected. Thus, the speech recognition section **362** outputs the category data indicating the category of "others".

### (S216):

The conversation processing section **355** refers to the conversation database **354** to randomly select any of a plurality of apparatus speech data corresponding to the category data, and outputs the selected apparatus speech data.

Specifically, when the viewer's speech is "No, I'm not sure about it" (category "negative"), for example, the apparatus speech data which represents the phrase "So, let's cheer them up more. Next batter is Takahashi!" is output.

When the viewer's speech is "They will win if Okajima is in good condition" (category "others"), for example, the apparatus speech data which represents the phrase "I see" is output.

The sound synthesis section **256** converts the apparatus speech data to a sound signal, and a sound of reply is emitted from the sound output section **109**.

As described above, the effects achieved in embodiments 1 and 2 can also be achieved in embodiment 3. That is, a conversation is established based on the conversation data corresponding to the displayed images, such as a scene where a score is made, for example, whereby the possibility of misrecognizing the viewer's speech is reduced, and it is readily possible to smoothly sustain a conversation. Furthermore, each issue of the conversation can be terminated and changed to another according to the transition of displayed images without producing an unnatural impression. In embodiment 3, speech contents are classified into categories based on a keyword(s) included in a speech of a viewer, and this classification is utilized for producing apparatus speech data, whereby a conversation can readily be established in a more flexible manner. Furthermore, it is readily possible to reduce the conversation data for reply to be sustained in the conversation database **354** and to enhance the responsiveness of the apparatus. Furthermore, a conversation is established based on the conversation data according to the viewer's position (cheering mode for the Giants), or the like, whereby a special effect can be made to employ the interactive agent device **351** as a partner who shares pleasure of a score of the team they are cheering up, for example. The apparatus of embodiment 3 can give the viewer a feeling that the viewer is watching a baseball broadcast together with the interactive agent device **35**1.

### (Embodiment 4)

An example of a conversation apparatus of embodiment 4, which is described below, establishes a conversation about a content that is indefinite at the time when the conversation is made, for example, a conversation on a forecast of the progress of a game in a baseball broadcast, and temporarily stores the contents of the conversation. With such arrangements, the conversation can be sustained based on conversation data prepared according to the subsequent actual progress of the game.

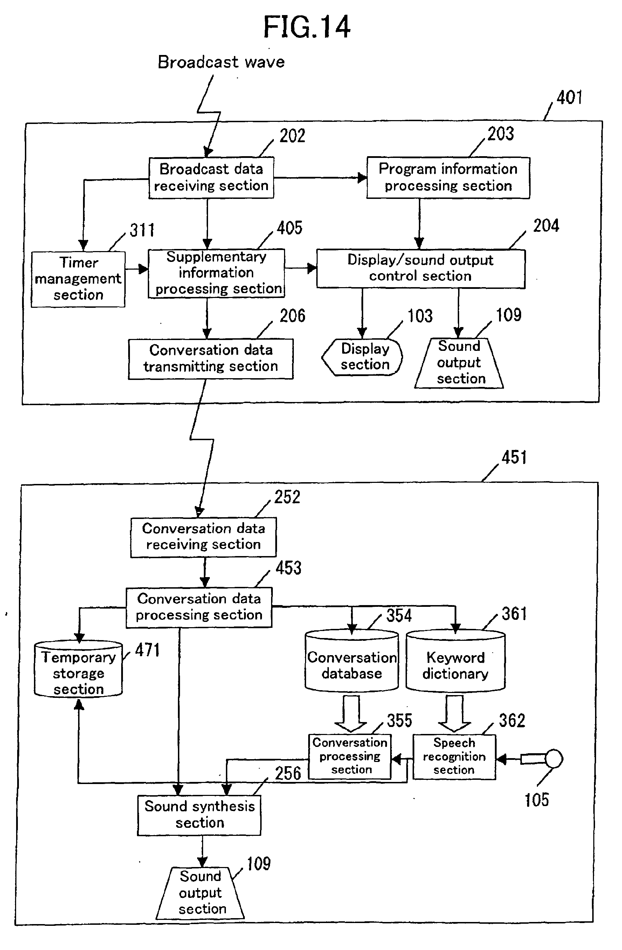

The conversation apparatus of this embodiment is different from the conversation apparatus of embodiment 3 (Figure **8**) in the supplementary information processing section. As shown in Figure **14**, for example, a digital television receiver **401** has a supplementary information processing section **40**5 in place of the supplementary information processing section **305**. The supplementary information processing section **405** is different from the supplementary information processing section 305 only in that the supplementary information processing section **405** does not have a function of confirming the viewer's cheering mode. (It should be noted that the digital television receiver **301** of embodiment 3 may be used.)

On the other hand, a conversation agent device **451** includes a temporary storage section **471** in addition to the elements of the interactive agent device **351** of embodiment 3. Furthermore, the conversation agent device **451** includes a conversation data processing section **453** in place of the conversation data processing section **353**. The speech recognition section **362** of embodiment 3 is also used in embodiment 4, but the output of the speech recognition section **362** is also supplied to the temporary storage section **471** according to the situation of the conversation. That is, the temporary storage section **471** retains data extracted from the contents of apparatus's speeches and viewer's speeches which represent a forecast about the transition of displayed images. The conversation data processing section **453** can output apparatus speech data selected according to whether or not the forecast is true based on the data which is retained in the temporary storage section **471** and the conversation data which is broadcast according to the actual transition of the displayed images.

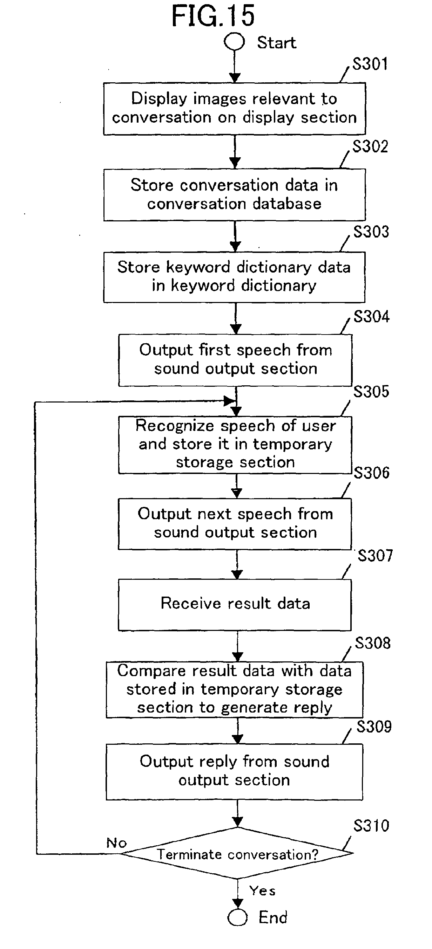

Now, an example of an operation of the conversation apparatus having the above structure is described with reference to Figures **15** through **18**. In this example, a baseball broadcast (sport program) is discussed, and a conversation is made about a forecast of the type of a next pitch of the pitcher. (That is, in this example, a conversation is not completed only based on the conversation data which can be obtained before the pitcher pitches. The contents of a subsequent part of the conversation are influenced by conversation data obtained after the pitcher pitches.) Herein, the entire operation of conversation control in the conversation apparatus of embodiment 4 is substantially the same as that of embodiment 3 (Figure **11**), and the conversation processing, which is largely different from that of embodiment 3, is shown in and mainly described with reference to Figure **15**.

### (S301) to (S304):

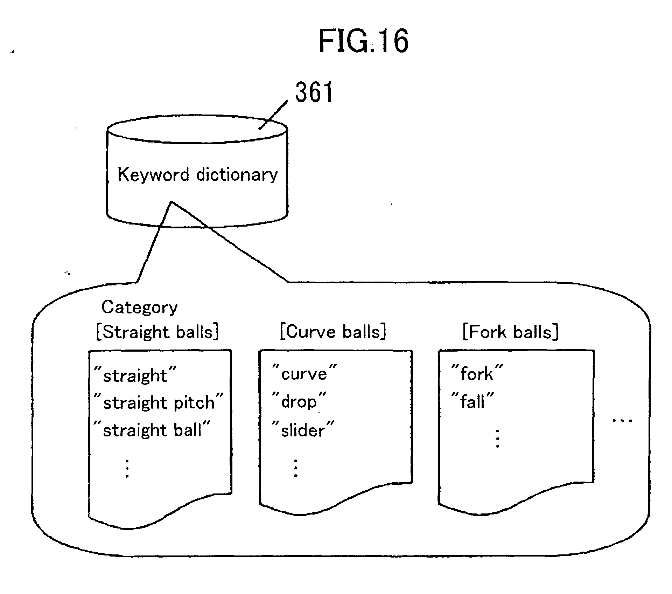

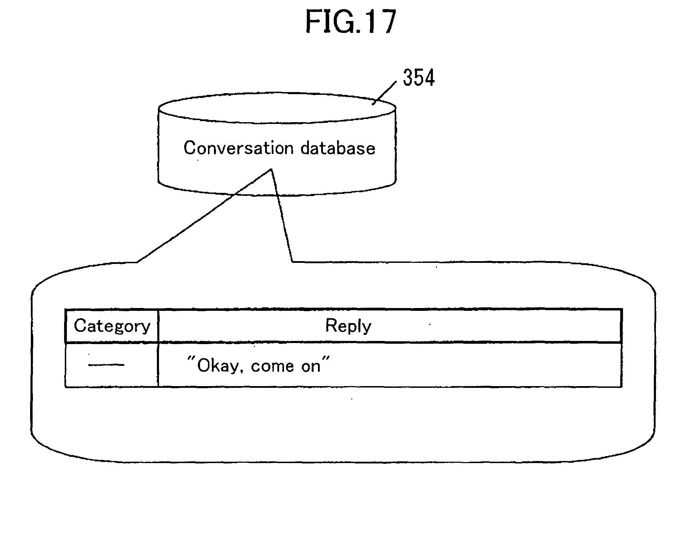

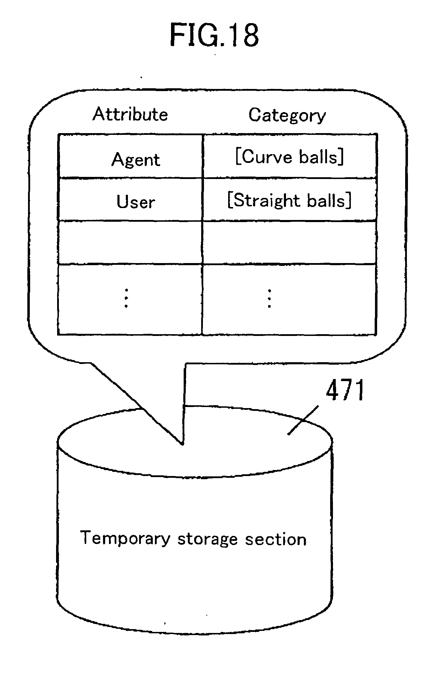

In the first place, the same processing as that performed at steps S211 to S214 of embodiment 3 (Figure **13**) is performed. That is, display of an image and output of a sound of a program are performed, conversation data and keyword dictionary data are stored in the keyword dictionary **361** and the conversation database **354**, respectively, and the first conversation sound is emitted. Specifically, for example, a scene of pitcher and batter is displayed on the display section **103**, and the sound of the scene is emitted from the sound output section **109**. Furthermore, keyword dictionary data and conversation data respectively shown in Figures **16** and **17**, for example, are stored in the keyword dictionary **361** and the conversation database 354. Further, conversation data for commencing a conversation is output from the conversation data processing section **453** to the sound synthesis section **256**. For example, the following sound is then emitted from the sound output section **109**: "Next batter is Matsui. Let's make a forecast about the type of pitch by the pitcher Yabu. What do you think is the first pitch? I think the first pitch is 'curve"'. At this timing, the conversation data processing section **453** stores attribute data and category data indicating that, for example, as shown in Figure **18**, the forecast made by the conversation agent device **451** is a curve ball (attribute: agent/category: curve balls) in the temporary storage section **471**.

### (S305):

Thereafter, if the viewer says that "I think it's 'straight"', the speech recognition section 362 detects a word 'straight', outputs category data indicating that the viewer spoke a word included in the category of "straight balls", and stores attribute data and category data indicating that the forecast made by the viewer is a straight ball (attribute: viewer/category: straight balls) in the temporary storage section **471**.

### (S306):

The category data output from the speech recognition section **362** is also input to the conversation processing section **355**. The conversation processing section **355** outputs apparatus speech data, and a cheering sound, for example, "Okay, come on", is output from the sound output section **109**. The contents of the reply by the conversation apparatus may be changed according to the category data in the same manner as in embodiment 3. (Such a conversation data may be stored in the conversation database **354**.) Alternatively, for example, the reply "Okay, come on", or the like, may be always offered regardless of the category data. Still alternatively, a different reply may be offered only when the category data indicates the category of "others".

### (S307):

After the pitcher actually pitches a ball, conversation data determined according to the result of the pitch, i.e., result category data which represents the type of the pitch and conversation data for a result speech which represents the content of the conversation determined according to the result category data are broadcast. These broadcast data are received by the broadcast data receiving section **202** and input to the conversation data processing section **353** via the conversation data transmitting section **206** and the conversation data receiving section **252**.

### (S308):

The conversation data processing section **353** collates the result category data (e.g., "straight") and the contents stored in the temporary storage section **471**, and outputs conversation data for a result speech which is prepared according to a result of the collation (in the above example, the viewer's forecast came true) to the sound synthesis section **256**.

### (S309):

Based on the conversation data for the result speech, for example, a sound "Straight, low inside. I failed. I think that the next pitch is 'curve'" is emitted.

### (S310):

Whether or not forecast data of the conversation agent device **45**1 about the next pitch is included in the conversation data for a result speech, for example, "I think that the next pitch is 'curve"', is determined. If included, the above process is performed again from step S306. If not, the conversation processing is terminated. Herein, the above determination may be made by executing a program transmitted together with the conversation data in the conversation data processing section **353**, or the like.

As described above, the contents of the conversation with the viewer are temporarily stored, and a subsequent conversation is established based on the stored contents of the conversation and subsequently-received conversation data, whereby a conversation about a content which is indefinite at the time when the conversation is commenced can be realized. That is, an impression that a mechanical conversation is made under a predetermined scenario is reduced, and the viewer can have a feeling that he/she enjoys a broadcast program together with the apparatus while having quizzes.

### (Embodiment 5)

An example of a conversation apparatus of embodiment 5 is described below. In this example, a conversation is not performed by receiving conversation data directly representing the content of a conversation, but by receiving data selected according to the transition of a program (displayed images) and information which represents a rule for generating conversation data based on the data selected according to the transition of the program.

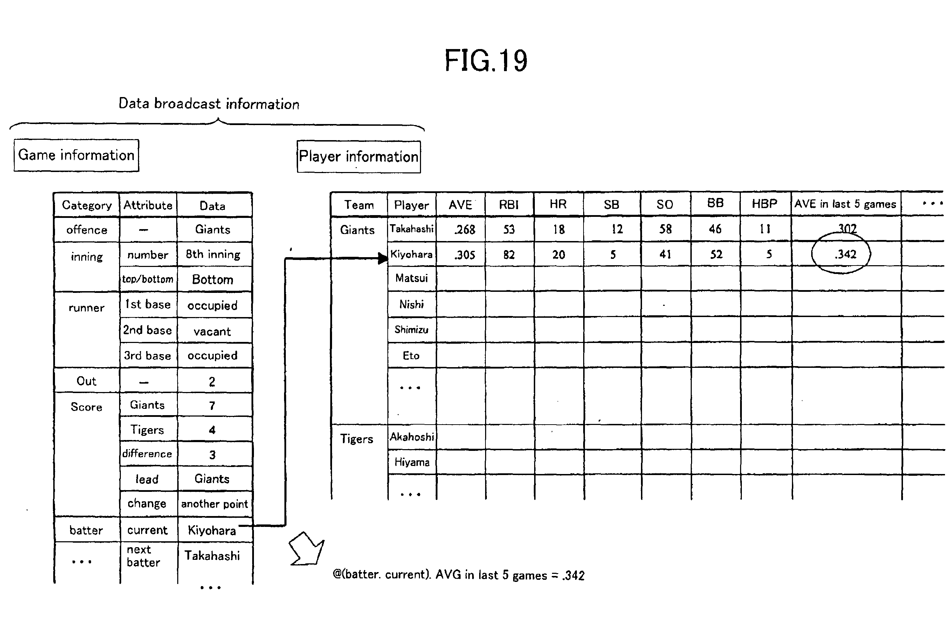

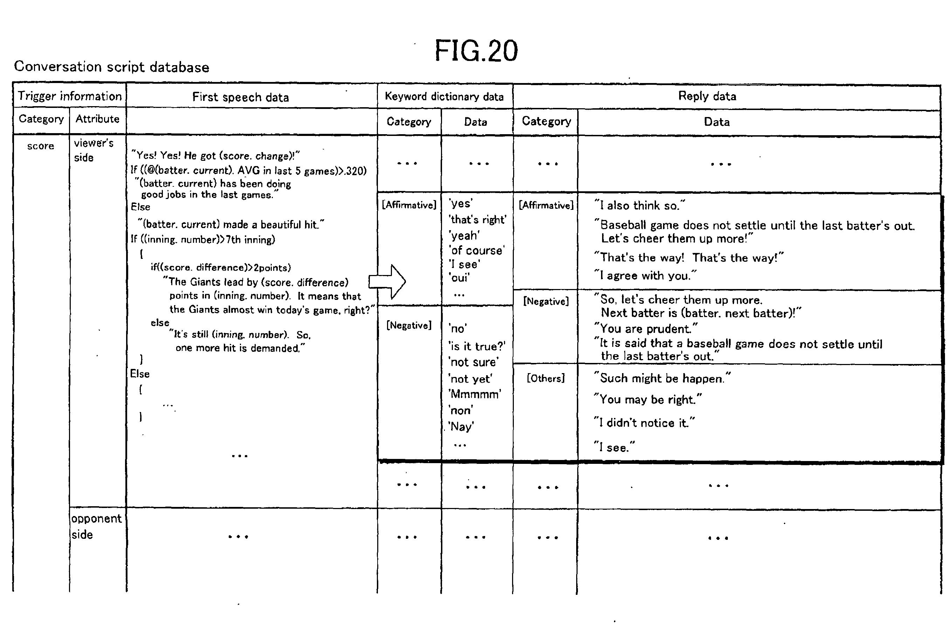

For example, in a data broadcast of baseball, data broadcast information, such as game information about the progress of a game and player information about player's records (shown in Figure **19**), is sometimes transmitted together with image data and sound data. In embodiment 5, a script for referring to such data broadcast information can be executed so that conversation data can be generated according to the transition of the screen. In the following description, conversation data for commencing a conversation and conversation data for reply are generated based on a script shown in Figure **20**, for example. (Keyword dictionary data may also be generated based on the script.) In this example, a resultant content of a conversation is the same as that described in embodiment 3.

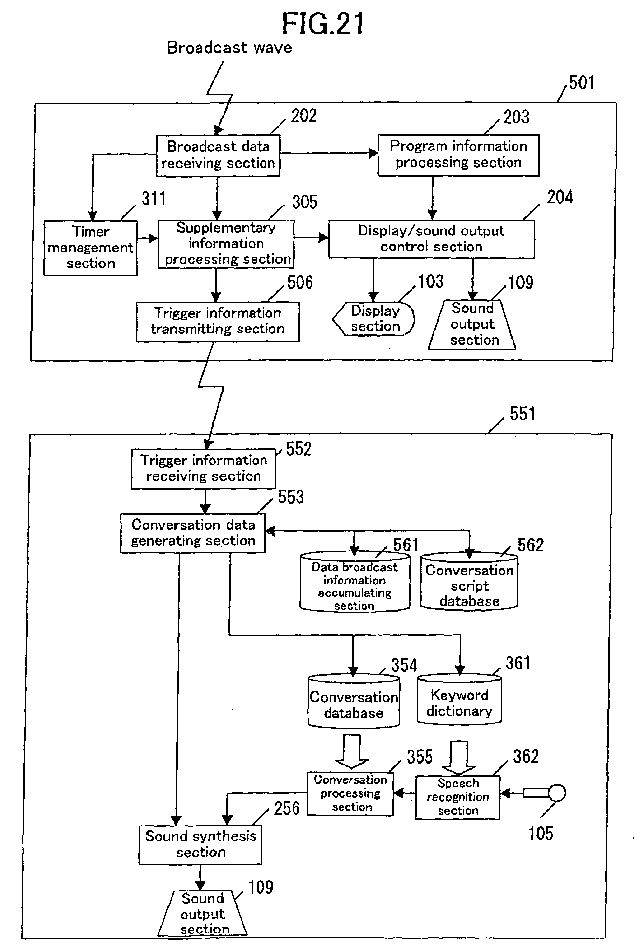

A conversation apparatus of this embodiment is different from the conversation apparatus of embodiment 3 (Figure **8**) in that, as shown in Figure **21** for example, a digital television receiver **501** includes a trigger information transmitting section **506** in place of the conversation data transmitting section **206.** An interactive agent device **551** includes a trigger information receiving section **552** and a conversation data generating section **553** in place of the conversation data receiving section **252** and the conversation data processing section **353.** The interactive agent device **551** further includes a data broadcast information accumulating section 561 and a conversation script database **562**.

The trigger information transmitting section **506** and the trigger information receiving section **552** transmit or receive conversation script data, data broadcast information (game information and player information), and trigger information indicating the timing for commencing a conversation (described later), which are received as program supplementary information. The substantial structures of the trigger information transmitting section **506** and the trigger information receiving section **552** are the same as those of the conversation data transmitting section **206** and the conversation data receiving section **252** of embodiment 3, respectively.

When conversation script data and data broadcast information are received, the conversation data generating section **553** stores the conversation script data and the data broadcast information in the conversation script database **56**2 and the data broadcast information accumulating section **561,** respectively. When trigger information is received, the conversation data generating section **553** generates conversation data (conversation data for commencing a conversation, conversation data for reply, and keyword dictionary data) based on the conversation script data and data broadcast information, and outputs the generated conversation data to the sound synthesis section **256**. Furthermore, the generated conversation data is also stored in the conversation database **354** or the keyword dictionary **361.**

An example of data broadcast information stored in the data broadcast information accumulating section **561** and an example of a conversation script database stored in the conversation script database **562** are now specifically described.

The data broadcast information shown in Figure **19** includes game information and player information as described above. The game information includes various data corresponding to categories and attributes. More specifically, the difference of scores at a certain time in the game can be obtained by specifying the category and attribute, for example, "category=score/attribute=difference". As to the player information, various data of each player can be obtained by specifying the team and player's name.

As shown in Figure **20**, the conversation script database **562** stores a plurality of conversation script data prepared according to various situations during the transition of the display screen in such a manner that the plurality of conversation script data are classified so as to correspond to trigger information including categories and attributes. For example, if trigger information of "category=score/attribute=viewer's side" is received when the team of the viewer's side makes a score, conversation script data corresponding to the category of "score" and the attribute of "viewer's side" of Figure **20** is executed, and conversation data for commencing a conversation is generated. The conversation script data also has the same kind of correspondence between the keyword dictionary data or the conversation data for reply and the trigger information as the correspondence made between the conversation data for commencing a conversation and the trigger information. However, in the case where certain keyword dictionary data or conversation data for reply is commonly used regardless of trigger information, the keyword dictionary data or the conversation data for reply is not provided for each trigger information in a one-to-one manner, and a single set of the keyword dictionary data is commonly used for various cases. In the case where certain conversation script data can be commonly used for broadcast programs of the same kind, such conversation script data may be recorded in an apparatus in advance (for example, at the time of production of the apparatus). The manner of classification is not necessarily limited to the above example. For example, conversation script data, or the like, may be selected according to identification information (ID).

Next, specific details of the above-described conversation script data are briefly described. The example of Figure **20** shows that the item "(score. change)" is replaced with data corresponding to "category=score/attribute=change", i.e., the words of "another point" in the game information. This example further shows that the item "(@(batter. current). AVG in last 5 games" is replaced with ".342", which is the "AVG in last 5 games" obtained from the player information for "Kiyohara" corresponding to "(batter. current)" in the game information. Furthermore, a syntax of "if" and "Else", or the like, means that the execution of the script is controlled according to conditions in the same manner as in generally-employed C languages. By using such a conversation script database, appropriate conversation data can be generated according to data broadcast information which is updated every moment without receiving conversation data every time the score, or the like, changes.

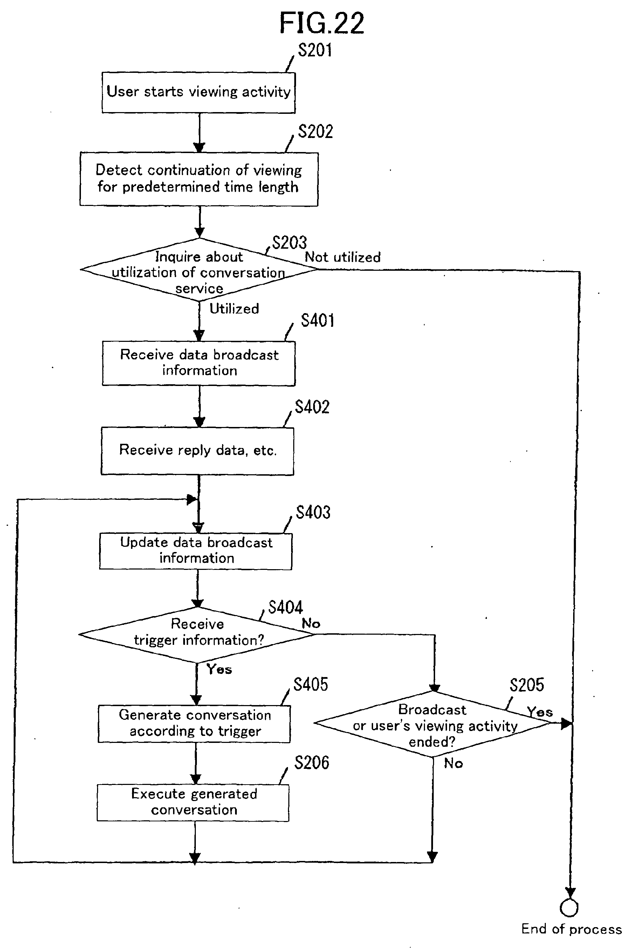

Hereinafter, an operation of the conversation apparatus having the above-described structure is described with reference to Figure **22**.

### (S201) to (S203):

The processing performed at these steps is the same as that performed at the steps denoted by the same step numbers in embodiment 3 (Figure **11**), and therefore, the description thereof is herein omitted.

### (S401):

In response to the reception of data broadcast information, the conversation data generating section **553** stores the game information at the time when a broadcast program is started and the player information in the data broadcast information accumulating section **561**.

### (S402):

Subsequently, in response to the reception of conversation script data, keyword dictionary data, and conversation data for reply, the conversation data generating section **553** stores these data in the conversation script database **562**. Herein, the processing performed at steps S401 and S402 is performed only once at the time of start of the broadcast program. It should be noted that the processing of step S401 and the processing of step S402 may be performed in the opposite order. In the case where the processing of step S403 is first performed in place of step S401, the process of step S401 may be performed at step S403. Data which needs to be changed with less frequency during the program, for example, the conversation script data received at step S402, may be stored in advance, or may be stored via a route different from that for the broadcast, for example, a network, a recording medium, or the like.

### (S403):

In the case where information representing a change of the data broadcast information is received, the game information and/or player information in the data broadcast information accumulating section **561** are updated.

### (S404):

It is determined whether or not trigger information prepared according to the transition of the display screen is received.

### (S205):

If the trigger information is not received at step S404, it is determined whether or not the currently-received baseball program has ended, or whether or not the viewing activity of the viewer has ended, i.e., whether or not the viewer has performed a manipulation of changing the program to be used. If the broadcast program or viewing activity has been ended, the above process is performed again from step S201. If the broadcast program or viewing activity has not been ended, the above process is performed again from step S403.

### (S405):

If the trigger information is received at step S404, the conversation script data corresponding to the received trigger information is executed, whereby conversation data for commencing a conversation is generated.

Specifically, if the trigger information of "category=score/attribute=viewer's side" is received when an image of a scene where the team of the viewer's side makes a score is displayed, the data of "Yes! Yes! He got another point! Kiyohara has been doing good jobs in the last games. The Giants lead by 3 points in the 8th inning. It means that the Giants almost win today's game, right?" is generated as the conversation data for commencing a conversation by the execution of the conversation script data according to the above-described rule.

More specifically, as to the first sentence, the item "(score. change)" in the conversation script data is replaced with the words of "another point" which is obtained by searching through the game information, whereby the phrase "Yes! Yes! He got another point!" is generated.

As to the second sentence, the item "(@(batter. current). AVG in last 5 games" is replaced with ".342", which corresponds to data of "Kiyohara. AVG in last 5 games" (the batting average in the last 5 games of Kiyohara, the current batter who has just made a timely hit), and thereafter, the condition determination for the 'if sentence, ".342>.320", is checked. In this example, a result of the check is true, and therefore, the phrase of "Kiyohara has been doing good jobs in the last games" is generated.

As to the third sentence also, items of "(inning. number)" and "(score. difference)" in the conversation script data are replaced with "8" and "3", respectively, in the same manner, and the phrase of "The Giants lead by 3 points in the 8th inning. It means that the Giants almost win today's game, right?" is generated.

The conversation data for commencing a conversation, which is generated as described above, is output from the conversation data generating section **553** to the sound synthesis section **256**.

Then, search and replacement are performed in the same manner for the item of (batter. next batter) in the reply of the "negative" category included in the conversation data for reply, whereby the phrase of "... Next batter is Takahashi!" is generated and stored in the conversation database **354**.

In this example, the keyword dictionary data corresponding to the above trigger information does not include an item to be replaced. Therefore, the keyword dictionary data is read out from the conversation script database **562** and stored in the keyword dictionary **361** as it is.

### (S206):

The conversation data for commencing a conversation, which is output to the sound synthesis section **256**, and the contents stored in the conversation database **354** and the keyword dictionary **361** are the same as those of embodiment 3. Therefore, the same conversation is established by performing the same process as that shown in Figure **13**.

As described above, conversation data is automatically generated based on the previously-stored conversation script data, data broadcast information, and trigger information determined according to the transition of the display screen. Thus, an appropriate conversation can be established in a more flexible manner according to the display screen without receiving conversation data every time a conversation is commenced. Furthermore, the amount of data transmission is reduced, and the redundant data is reduced, whereby the storage capacity can also be reduced.

### (Embodiment 6)

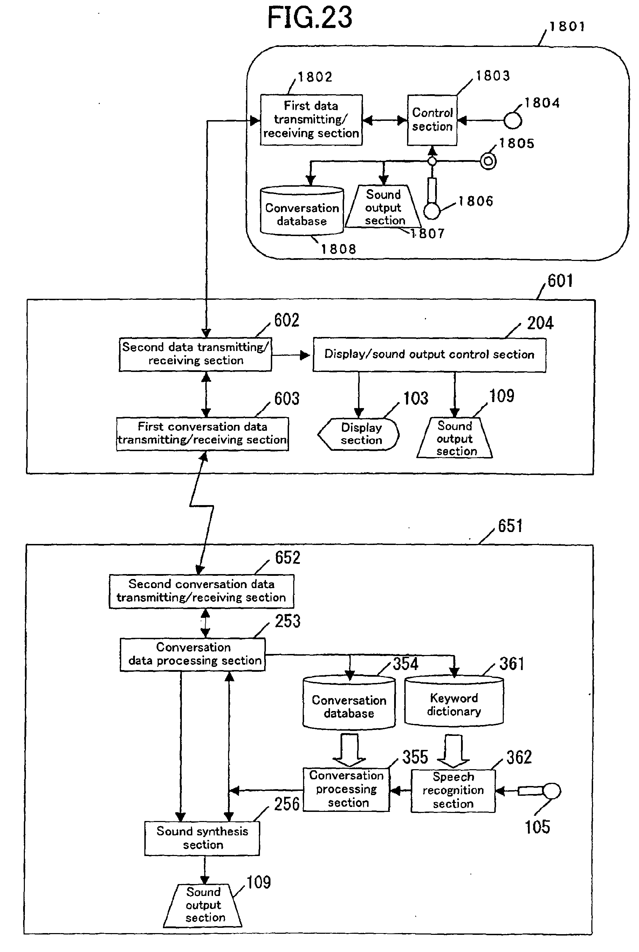

Next, a conversation apparatus according to embodiment 6 of the present invention is described. In the first place, the structure of this conversation apparatus is described. As shown in Figure **23**, this conversation apparatus includes a door phone **1801** in addition to a digital television receiver **601** and an interactive agent apparatus **651**. The door phone **1801** includes a first data transmitting/receiving section **1802**, a control section **1803,** a switch **1804**, an image input section **1805**, a sound input section **1806**, a sound output section **1807**, and a conversation database **1808**. The first data transmitting/receiving section **1802** performs transmission and reception of image data and sound data with the digital television receiver **601**. The switch **1804** is a calling switch of the door phone **1801**. A visitor pushes the switch **1804** to notify his/her visit. The image input section **1805** is, for example, a television camera for capturing an image of a visitor. The sound input section **1806** is, for example, a microphone for inputting a speech of a visitor. The conversation database **1808** retains conversation data of a speech to be offered to a visitor. The sound output section **1807** outputs conversation data in the form of a speech. The control section **1803** controls the entire operation of the door phone **1801**.

The digital television receiver **601** is different from the digital television receiver **301** of embodiment 3 (Figure **8**) in that the digital television receiver **601** includes a second data transmitting/receiving section **602** for transmitting/receiving image data and sound data to/from the door phone **1801**, and a first conversation data transmitting/receiving section **603** for transmitting/receiving conversation data in relation to images obtained from the image input section **1805** to/from the interactive agent apparatus **651**, in place of the broadcast data receiving section **202**, the program information processing section **203**, the supplementary information processing section **305**, and the conversation data transmitting section **206**, but the digital television receiver 601 does not include the timer management section **311**. The other elements of the digital television receiver **601** are the same as those of the digital television receiver **301**. The first conversation data transmitting/receiving section **603** also functions as a conversation data transmitting section for transmitting conversation data, or the like, to the interactive agent apparatus **651**.

The interactive agent apparatus **651** is different from the interactive agent apparatus **351** of embodiment 3 in that the interactive agent apparatus **651** includes a second conversation data transmitting/receiving section **652** in place of the conversation data receiving section **252**. The other elements of the interactive agent apparatus **651** are the same as those of the interactive agent apparatus **351**. The second conversation data transmitting/receiving section **652** also functions as a conversation data receiving section for receiving conversation data, or the like, transmitted from the digital television receiver.

Next, an operation of the conversation apparatus having the above structure is described by explaining an example of a scene where a visitor comes when a user is viewing a program on the digital television receiver **601**. Specifically, the user determines in front of the digital television receiver **601** whether or not he/she replies to the visitor, and the following conversation is established:
(1) Interactive agent device: "Someone has come. Do you answer it?" (A visitor is displayed on the display section 103.)
(2) User: "No" (while looking at the visitor)
(3) Interactive agent device: "Okay."
(4) Door phone: "Nobody's home now."

In the first place, the visitor pushes the switch **1804**. The control section **1803** determines that the visitor has come, and powers on the image input section **1805**, the sound input section **1806**, and the sound output section **1807**. Then, an image of the visitor input from the image input section **1805** is transmitted through the control section **1803**, the first data transmitting/receiving section **1802**, the second data transmitting/receiving section **602,** and the display/sound output control section **204,** and displayed on a part of the display section **103** or over the entire display section **103**.

Next, the control section **1803** transmits from the first data transmitting/receiving section **1802** conversation data for establishing a conversation with the user and the first word(s) to be spoken to the user, which are stored in the conversation database **1808.** The conversation data, or the like, is passed through the second data transmitting/receiving section **602** of the digital television receiver **601** and transmitted from the first conversation data transmitting/receiving section **603** to the interactive agent apparatus **651**. The second conversation data transmitting/receiving section **652** of the interactive agent apparatus **651** receives the conversation data, or the like, and transmits the received data to the conversation data processing section **253**. The conversation data processing section **253** transmits conversation data, i.e., reply data for the user, to the conversation database **354**. The conversation database **354** stores the reply data. In parallel with the above, the conversation data processing section 253 transmits the words to be offered by the interactive agent apparatus **651** to the user, i.e., (1) "Someone has come. Do you answer it?", to the sound synthesis section **256.** The sound synthesis section **256** emits the phrase (1) with synthesized sound. The reply data may be transmitted from the conversation database **1808** (on the door phone's side) to the conversation database **354** (on the interactive agent side) in advance before the visitor comes. Alternatively, the reply data may be recorded in the apparatus at the time of shipping of the apparatus.

Next, the speech of the user, (2) "No", is input from the sound input section **105**. The speech recognition section **362** recognizes the user's speech (2), and the conversation processing section **355** selects from the conversation database **354** the reply corresponding to the user's speech of "No" (i.e., the category of "negative"), (3) "Okay", and transmits the selected reply to the sound synthesis section **256**. The sound synthesis section **256** outputs the reply (3) with synthesized sound.

On the other hand, the conversation processing section **355** transmits information indicating that a result of the speech recognition is included in the category of "negative" to the conversation data processing section **253**. This information of "negative" category is passed through the second conversation data transmitting/receiving section **652**, the first conversation data transmitting/receiving section **603**, the second data transmitting/receiving section **602**, and the first data transmitting/receiving section **1802**, and supplied to the control section **1803**. The control section **1803** selects the speech (4), "Nobody's home now", from the conversation database **1808** and outputs the selected speech from the sound output section **1807**.

In the last, in response to an instruction from the control section **1803**, the display of the display section **103** is terminated, the conversation held by the conversation data processing section **253** is terminated, and the image input section **1805**, the sound input section **1806**, and the sound output section **1807** are powered off.

As described above, in the conversation apparatus of embodiment 6, reply data such as "Okay", or the like, is generated based on conversation data prepared in relation to an image of a visitor according to information that the result of the recognition of the speech of a user who is viewing the image of the visitor, for example, "No", is included in the category of "negative". Thus, the scene of the conversation with the visitor can be shared between the apparatus and the user. As a result, the possibility of misrecognizing the user's speech is reduced, and a conversation can be established smoothly. Furthermore, the user can respond to a visitor while viewing a program on the digital television receiver 601, and therefore, the user can respond to the visitor in an easier fashion.

In the above-described examples of embodiments 2-5, the conversation apparatus is formed by the television receiver and the interactive agent apparatus, but the present invention is not limited to such examples. For example, the conversation apparatus is realized by only a television receiver as described in embodiment 1, and an image of a character, or the like, is displayed on the display section of the television receiver such that the user gets an impression that he/she has an conversation with the character. Furthermore, the present invention is not limited to a conversation with sound. The message of the apparatus can be conveyed by display of letters.

The arrangement of the elements, for example, which of the television receiver or conversation agent device each element is provided in, is not limited to the above examples of embodiments 2-5. Various arrangements are possible as described below. For example, the supplementary information processing section may be provided to the side of the interactive agent apparatus. The conversation data processing section and conversation database may be provided to the side of the television receiver. The speech recognition section may be provided in the television receiver or a STB (Set Top Box). Alternatively, a conversation apparatus may be formed only by the interactive agent apparatus described in embodiments 2-5, and display of broadcast images, or the like, may be performed using a commonly-employed television receiver, or the like.

The present invention is not limited to a conversation apparatus which uses a television receiver. For example, a conversation apparatus which only performs data processing and signal processing may be formed using a STB, or the like, such that display of images and input/output of sound are performed by other external display device, or the like.

Although an example of receiving broadcast image data (image signal) and conversation data has been described above, these data are not limited to data supplied by broadcasting. The same effects of the present invention can be achieved with data supplied via the Internet (broadband), a recording medium, or the like. As to broadcasts also, the present invention can be applied to devices which can receive various forms of broadcasts, for example, terrestrial broadcast, satellite broadcast, CATV (cable television broadcast), or the like.

Furthermore, image data, or the like, and conversation data may be input via different routes. The present invention is not limited to synchronous input of data. Conversation data (including keyword dictionary data or the like) may be input prior to image data, or the like. Alternatively, conversation data may be stored (i.e., allowed to reside) in the apparatus in advance (for example, at the time of production of the apparatus). If data which can be generally used in common, such as keyword dictionary data, or the like, is stored in advance as described above, it is advantageous in view of reduction of the amount of transmitted data or simplification of transmission processing. Herein, if the conversation data is sequentially processed along with the transition of displayed images, conversation processing is sequentially performed based on a timing signal (or information) according to the transition of the displayed images. If conversation data is processed in a random (indefinite) order or the same conversation data is repeatedly processed, identification information for specifying the conversation data is used together with a timing signal according to the transition of the displayed images. Alternatively, the conversation apparatus may be arranged such that conversation data includes, for example, time information which indicates the elapsed time length between the time when display of images is started and the time when the conversation data is to be used, and the time length during which an image is displayed is measured. The measured time length and the time information are compared, and a conversation based on the conversation data is commenced when the time length indicated by the time information elapses.

The data format of conversation data, or the like, is not limited to a format of pure data which represents a content of data, but a program or command including details of processing of the conversation data, or the like, may be used. More specifically, this technique can readily be realized by using a description format, such as XML or BML which is an application of XML to broadcast data. That is, if a conversation apparatus has a mechanism for interpreting and executing such a command, or the like, it is readily possible to perform conversation processing with conversation data, or the like, in a more flexible manner.

The elements of the above embodiments and variations may be combined, omitted, or selected in various ways so long as it is logically permissible. Specifically, the timer management section **311** of embodiment 3 (Figure **8**) may be omitted, or may be used in embodiment 2 (Figure **5**), for example. The temporary storage section **471** of embodiment 4 (Figure **14**) may be used in embodiment 2.

The method for synthesizing sound is not limited to a method of reading text data aloud with a synthesized sound. For example, sound data which can be obtained in advance by encoding a recorded sound may be used, and this sound data may be decoded according to conversation data to emit a voice. In this example, a quality of voice or intonation which are difficult to generate by a synthesized sound can easily be expressed. However, the present invention is not limited to these examples, but various known methods can be employed.

Furthermore, various known methods can be employed as a method of speech recognition. The essential effects of the present invention can be obtained regardless of the employed recognition method.

In the example of embodiment 1 and other examples, the conversation is terminated after only a single query and a single reply are exchanged. As a matter of course, the present invention is not limited to this, but queries and replies may be exchanged more than once. Even in such a case, the issue of conversation is naturally changed along with the transition to new display after queries and replies are repeated several times, whereby it is possible to prevent an incoherent conversation from being continued.

In the case where a conversation apparatus is designed such that queries and replies in a conversation can be repeated multiple times, even when new conversation data or timing information is input as a result of the transition of displayed images, a new conversation is not necessarily commenced in response to the data or information. For example, in the case where speech data of a viewer is included in the range of conversation contents which are previously expected in conversation data, i.e., in the case where the hit rate of the viewer's speech data for keywords defined in the conversation data (hereinafter, this condition is rephrased as "the degree of conformity of a conversation is high"), a conversation currently carried out may be continued even if new conversation data, or the like, is input. Furthermore, information indicating the priority may be included in new conversation data, or the like, and it may be determined based on the priority and the degree of conformity of a conversation whether the conversation is continued or exchanged to a new conversation. Specifically, in the case where the degree of conformity of a conversation is high, a conversation is continued when conversation data, or the like, has a low priority. On the other hand, in the case where the degree of conformity of a conversation is low (i.e., in the case where a conversation is likely to be incoherent), the conversation is changes to a new one when new conversation data, or the like, is input even if it has a low priority. With such an arrangement, continuation of an inappropriate conversation can readily be prevented.

Alternatively, it may be determined whether or not a new conversation is commenced based on profile information of a viewer retained in a conversation apparatus or obtained from another device via a network, or the like (or based on a combination of two or more of the profile information, the degree of conformity of a conversation, and the priority of new conversation data, or the like). Specifically, in the case where profile information indicates that a viewer is interested in, for example, issues about cooking, a conversation currently carried out about cooking is continued even when new conversation data, or the like, about an issue different from cooking is input. On the other hand, when new conversation data, or the like, about cooking is input during a conversation about an issue different from cooking, a new conversation is commenced even if the degree of conformity of the current conversation is a little bit high. With such an arrangement, continuation and change of conversations can be performed more smoothly. Furthermore, condition information itself for continuing or changing conversations, for example, a condition for determining which of the combinations of the profile information, the degree of conformity of a conversation, and the like, has a greater importance, may be set in various configurations.

Furthermore, in the case where continuation and change of conversations are controlled based on the profile information in the above-described manner, the profile information itself may be updated according to the degree of conformity of a conversation subsequently carried out. Specifically, in the case where the degree of conformity of a conversation about cooking, for example, is high, the profile information is updated so as to indicate that a viewer is more interested in an issue about cooking, whereby it is readily possible to make a conversation more appropriate.

Furthermore, a conversation apparatus may be designed such that, when a conversation is established according to display of images as described above, data prepared according to the contents of a viewer's speech and the degree of conformity of the conversation can be recorded in a recording medium together with the images, and a portion of data to be reproduced can be searched for using the above data, the degree of conformity of a conversation, etc., as a key. With such an arrangement, a portion of the conversation spoken by a viewer when he/she was impressed by displayed images, or a portion of the conversation where it was lively sustained can readily be reproduced.

### Industrial Applicability

As described above, according to the present invention, a conversation is established based on conversation data prepared in relation to images which transit in a non-interactive manner for a viewer, whereby the viewer can be naturally introduced into conversation contents expected in advance by a conversation apparatus. Thus, even with an apparatus structure of a relatively small size, the possibility of misrecognizing speeches of the viewer can be reduced, and a conversation is smoothly sustained, whereby the viewer can readily have an impression that the conversation is established almost naturally. Therefore, such a conversation apparatus is useful in the field of viewing devices, household electric products, and the like.

## Claims

1. A conversation apparatus, comprising:
display control means for displaying on a display section images which transit in a non-interactive manner for a viewer based on image data;
conversation data storage means for storing conversation data corresponding to the transition of the images;
speech recognition means for performing recognition processing based on a speech emitted by the viewer to output viewer speech data which represents a speech content of the viewer;
conversation processing means for outputting apparatus speech data which represents a speech content to be output by the conversation apparatus based on the viewer speech data, the conversation data, and timing information determined according to the transition of the images; and
speech control means for allowing a speech emitting section to emit a sound based on the apparatus speech data.

2. A conversation apparatus according to claim 1, further comprising input means, to which the image data and the conversation data are input through at least one of a wireless communication, a wire communication, a network communication, and a recording medium, and from which the input data is output to the display control means and the conversation data storage means.

3. A conversation apparatus according to claim 2, wherein the input means is structured such that the image data and the conversation data are input through different routes.

4. A conversation apparatus according to claim 2, wherein the input means is structured such that the conversation data is input at a predetermined timing determined according to the image data to output the timing information.

5. A conversation apparatus according to claim 2, further comprising viewer speech data storage means for storing the viewer speech data,
wherein the conversation processing means is structured to output the apparatus speech data based on the viewer speech data stored in the viewer speech data storage means and conversation data newly input to the input means after the viewer utters the speech on which the viewer speech data depends.

6. A conversation apparatus according to claim 1, wherein the conversation processing means is structured to output the apparatus speech data based on the timing information included in the image data.

7. A conversation apparatus according to claim 6 wherein:
the conversation data storage means is structured to store a plurality of conversation data;
the image data includes conversation data specifying information for specifying at least one of the plurality of conversation data together with the timing information; and
the conversation processing means is structured to output the apparatus speech data based on the timing information and the conversation data specifying information.

8. A conversation apparatus according to claim 1, further comprising time measurement means for outputting the timing information determined according to elapse of time during the display of the images,
wherein the conversation data includes output time information indicating the timing at which the apparatus speech data is to be output by the conversation processing means, and
the conversation processing means is structured to output the apparatus speech data based on the timing information and the output time information.

9. A conversation apparatus according to claim 1, wherein the conversation processing means is structured to output the apparatus speech data based on the conversation data and the timing information, thereby commencing a conversation with the viewer, and on the other hand, output the apparatus speech data based on the conversation data and the viewer speech data, thereby continuing the above commenced conversation.

10. A conversation apparatus according to claim 9, wherein the conversation processing means is structured to commence the new conversation based on the degree of conformity between the apparatus speech data and the viewer speech data in a conversation already commenced with a viewer and based on the priority for commencing a new conversation with the viewer.

11. A conversation apparatus according to claim 9, wherein the conversation processing means is structured to commence a conversation with a viewer based on profile information about the viewer and conversation commencement condition information which represents a condition for commencing a conversation with the viewer according to the profile information.

12. A conversation apparatus according to claim 9, wherein the conversation processing means is structured to commence a new conversation based on the degree of conformity between the apparatus speech data and the viewer speech data in a conversation already commenced with a viewer, profile information about the viewer, and conversation commencement condition information which represents a condition for commencing a conversation with the viewer according to the degree of conformity and the profile information.

13. A conversation apparatus according to claim 12, wherein the conversation processing means is structured to update the profile information according to the degree of conformity between the apparatus speech data and the viewer speech data in the commenced conversation.

14. A conversation apparatus according to claim 1, wherein the conversation processing means is structured to output the apparatus speech data when a certain series of the images are displayed in succession for a predetermined time length.

15. A conversation host device comprising:
input means to which image data representing images which transit in a non-interactive manner for a viewer and conversation data corresponding to the transition of the images are input through at least one of a wireless communication, a wire communication, a network communication, and a recording medium;
display control means for displaying the images on a display section based on the image data; and
transmitting means for transmitting the conversation data and timing information determined according to the transition of the images to a conversation slave device.

16. A conversation slave device comprising:
receiving means for receiving conversation data which is transmitted from a conversation host device and which corresponds to transition of images which transit in a non-interactive manner for a viewer and timing information determined according to the transition of the images;
conversation data storage means for storing the conversation data;
speech recognition means for performing recognition processing based on a speech emitted by the viewer to output viewer speech data which represents a speech content of the viewer;
conversation processing means for outputting apparatus speech data which represents a speech content to be output by the conversation slave apparatus based on the viewer speech data, the conversation data, and the timing information; and
speech control means for allowing a speech emitting section to emit a sound based on the apparatus speech data.

17. A conversation control method comprising:
a display control step of allowing a display section to display images which transit in a non-interactive manner for a viewer based on image data;
a speech recognition step of performing recognition processing based on a speech emitted by the viewer to output viewer speech data which represents a speech content of the viewer;
a conversation processing step of outputting apparatus speech data which represents a speech content to be output by a conversation apparatus based on the viewer speech data, the conversation data which corresponds to the transition of the images, and the timing information determined according to the transition of the images; and
a speech control step of allowing a speech emitting section to emit a sound based on the apparatus speech data.

18. A conversation control method comprising:
an input step of inputting image data representing images which transit in a non-interactive manner for a viewer and conversation data corresponding to the transition of the images through at least one of a wireless communication, a wire communication, a network communication, and a recording medium;
a display control step of displaying the images on a display s3ection based on the image data; and
a transmission step of transmitting the conversation data and timing information determined according to the transition of the images to a conversation slave device.

19. A conversation control method comprising:
a reception step of receiving conversation data which is transmitted from a conversation host device and which corresponds to transition of images which transit in a non-interactive manner for a viewer and of receiving timing information determined according to the transition of the images;
a speech recognition step of performing recognition processing based on a speech emitted by the viewer to output viewer speech data which represents a speech content of the viewer;
a conversation processing step of outputting apparatus speech data which represents a speech content to be output by the conversation slave apparatus based on the viewer speech data, the conversation data, and the timing information; and
a speech control step of allowing a speech emitting section to emit a sound based on the apparatus speech data.

20. A conversation control program for instructing a computer to execute the following steps:
a display control step of allowing a display section to display images which transit in a non-interactive manner for a viewer based on image data;
a speech recognition step of performing recognition processing based on a speech emitted by the viewer to output viewer speech data which represents a speech content of the viewer;
a conversation processing step of outputting apparatus speech data which represents a speech content to be output by a conversation apparatus based on the viewer speech data, the conversation data which corresponds to the transition of the images, and the timing information determined according to the transition of the images; and
a speech control step of allowing a speech emitting section to emit a sound based on the apparatus speech data.

21. A conversation control program for instructing a computer to execute the following steps:
an input step of inputting image data representing images which transit in a non-interactive manner for a viewer and conversation data corresponding to the transition of the images through at least one of a wireless communication, a wire communication, a network communication, and a recording medium;
a display control step of displaying the images on a display section based on the image data; and
a transmission step of transmitting the conversation data and timing information determined according to the transition of the images to a conversation slave device.

22. A conversation control program for instructing a computer to execute the following steps:
a reception step of receiving conversation data which is transmitted from a conversation host device and which corresponds to transition of images which transit in a non-interactive manner for a viewer and timing information determined according to the transition of the images;
a speech recognition step of performing recognition processing based on a speech emitted by the viewer to output viewer speech data which represents a speech content of the viewer;
a conversation processing step of outputting apparatus speech data which represents a speech content to be output by the conversation slave apparatus based on the viewer speech data, the conversation data, and the timing information; and
a speech control step of allowing a speech emitting section to emit a sound based on the apparatus speech data.
